# EUROPEAN PATENT APPLICATION

(11) **EP 3 637 015 A1**
(43) Date of publication of application: **15.04.2020**
(21) Application number: 18814108.9
(22) Date of filing: 30.05.2018
(51) Int. Cl.: F24V 30/00, F24H 1/00, F24H 1/18, F25B 17/12

(54) **HEAT-STORAGE SYSTEM AND HEAT-STORAGE SYSTEM OPERATION METHOD**

(30) Priority: 06.06.2017 JP 2017111629
(71) Applicant: Panasonic Corporation, Osaka 571-8501 (JP)
(72) Inventor: KAWAKAMI, Yoshiaki, Osaka-shi Osaka 540-6207 (JP); KATO, Atsushi, Osaka-shi Osaka 540-6207 (JP); TAKAHASHI, Yasufumi, Osaka-shi Osaka 540-6207 (JP)
(74) Representative: Grünecker Patent- und Rechtsanwälte PartG mbB
(86) International application number: PCT/JP2018/020726
(87) International publication number: WO 2018/225602

(57) **Abstract**

A heat-storage system (1) including a plurality of hydrogen storage alloy tanks (10), (11) having different dissociation pressure characteristics with respect to alloy temperatures from each other is configured to execute a first operating mode to cause movement of hydrogen from a hydrogen storage alloy (A) in a first tank (10) to a hydrogen storage alloy (B) in a second tank (11), and produce hot water using heat generated by a hydrogen storage reaction, and a second operating mode to cause movement of hydrogen from the hydrogen storage alloy (B) in the second tank (11) to the hydrogen storage alloy (A) in the first tank (10).

## Description

### Technical Field

The present disclosure relates to a heat-storage system that covers a hot water supply load at least in the wintertime when demands for hot water supply increase, a house provided with the heat-storage system, and an operating method of the heat-storage system.

### Background Art

A hydrogen storage alloy causes an exothermic reaction when storing hydrogen, and causes an endothermic reaction when releasing hydrogen. PTL 1 discloses a technique for treating a cold load by a heat pump system using this characteristic of the hydrogen storage alloy. In the heat pump system of PTL 1, a plurality of hydrogen storage alloy tanks are provided, and a set of heat pump units is formed by a first hydrogen storage alloy tank and a second hydrogen storage alloy tank, each of which has a different type of hydrogen storage alloy. The hydrogen storage alloy tanks in the heat pump unit are connected to each other by piping, and are configured such that hydrogen released from one of the hydrogen storage alloy tanks flows into the other of the hydrogen storage alloy tanks. In PTL 1, a cold output process and a regeneration process are repeatedly performed in such a heat pump system, and a heat medium circulating between a cold load and a heat exchanger is cooled by using the endothermic reaction when hydrogen is released, so as to treat the cold load.

### Citation List

### Patent Literature

PTL 1: JP 2002-277095 A

### Summary of Invention

### Technical Problem

The conventional heat pump system described above is a technique for dealing with a cold load, and production of hot water is not considered.

The present disclosure has been made in view ofthe above-mentioned situation, and it is an object thereof to perform hot water production efficiently in a heat-storage system.

### Solution to Problem

In order to solve the above problem, a heat-storage system of the present disclosure includes a first tank that stores a first hydrogen storage alloy, a second tank that stores a second hydrogen storage alloy that is different from the first hydrogen storage alloy in dissociation pressure characteristic with respect to an alloy temperature, a heat storage device that stores heat generated in the second hydrogen storage alloy, a hydrogen transfer device configured such that hydrogen is movable between the first hydrogen storage alloy in the first tank and the second hydrogen storage alloy in the second tank, a first heat supply device that supplies heat of a heat source to the first hydrogen storage alloy, a second heat supply device that supplies cold of outside air to the first hydrogen storage alloy, and a controller that executes a first operating mode to heat the first hydrogen storage alloy through the first heat supply device to cause movement of hydrogen from the first hydrogen storage alloy in the first tank to the second hydrogen storage alloy in the second tank, and a second operating mode to cool the first hydrogen storage alloy through the second heat supply device to cause movement of hydrogen from the second hydrogen storage alloy in the second tank to the first hydrogen storage alloy in the first tank.

An operating method of a heat-storage system of the present disclosure according to another aspect includes the steps of executing a first operating mode to supply heat of a heat source to a first hydrogen storage alloy tank in a first tank, to cause movement of hydrogen from the first hydrogen storage alloy in the first tank to a second hydrogen storage alloy in a second tank, the second hydrogen storage alloy being different from the first hydrogen storage alloy in dissociation pressure characteristic with respect to an alloy temperature, and executing a second operating mode to supply cold of outside air to the first hydrogen storage alloy, to cause movement of hydrogen from the second hydrogen storage alloy in the second tank to the first hydrogen storage alloy in the first tank, in which the step of executing the first operating mode includes a step of storing a temperature generated in the second hydrogen storage alloy in a heat storage device.

Moreover, a house of the present disclosure according to another aspect includes the above-described heat-storage system.

### Advantageous Effects of Invention

According to the present disclosure, hot water production can be performed more efficiently in a heat-storage system.

### Brief Description of Drawings

Fig. 1 is a diagram illustrating a schematic configuration of a heat-storage system according to a first embodiment of the present disclosure.
Fig. 2 is a diagram illustrating a specific example of the heat-storage system according to the first embodiment of the present disclosure.
Fig. 3 is a diagram illustrating a schematic configuration of a heat-storage system according to a second embodiment of the present disclosure.
Fig. 4 is a diagram illustrating a schematic configuration of a hydrogen unit according to the second embodiment of the present disclosure.
Fig. 5 is a chart illustrating alloy characteristics of hydrogen storage alloys according to the second embodiment of the present disclosure.
Fig. 6 is a diagram illustrating an operation pattern of the heat-storage system according to the second embodiment of the present disclosure.
Fig. 7 is a flow diagram of a water electrolysis operation during a normal operation of the heat-storage system according to the second embodiment of the present disclosure.
Fig. 8 is a flow diagram of a fuel cell operation during the normal operation of the heat-storage system according to the second embodiment of the present disclosure.
Fig. 9 is a flow diagram of a hot water supply operation during a heat pump operation of the heat-storage system according to the second embodiment of the present disclosure.
Fig. 10 is a chart for explaining movement of hydrogen during the hot water supply operation according to the second embodiment of the present disclosure.
Fig. 11 is a flow diagram of a regenerative operation during the heat pump operation of the heat-storage system according to the second embodiment of the present disclosure, and illustrates a case where a cooling heat medium circulates through a first tank.
Fig. 12 is a flow diagram of the regenerative operation during the heat pump operation of the heat-storage system according to the second embodiment of the present disclosure, and illustrates a case where a cooling heat medium circulates through each of the first tank and a second tank.
Fig. 13 is a chart for explaining hydrogen movement during the regenerative operation according to the second embodiment of the present disclosure.
Fig. 14 is a flow diagram of a hot water supply operation during a heat pump operation of a heat-storage system according to a third embodiment of the present disclosure.
Fig. 15 is a flow diagram of a fuel cell operation during a heat pump operation of a heat-storage system according to a fourth embodiment of the present disclosure.
Fig. 16 is a chart illustrating alloy characteristics of hydrogen storage alloys according to a fifth embodiment of the present disclosure.
Fig. 17 is a diagram illustrating a schematic configuration around a hydrogen storage alloy tank of a heat-storage system according to the fifth embodiment of the present disclosure.
Fig. 18 is a chart for explaining movement of hydrogen during a heat pump operation according to the fifth embodiment of the present disclosure.
Fig. 19 is a chart illustrating alloy characteristics of hydrogen storage alloys according to another embodiment of the present disclosure.
Fig. 20 is an example of a site layout view of a house in an urban area.
Fig. 21 is a diagram illustrating a footprint when only a lithium ion battery is used as power storage equipment in a house provided with a heat-storage system.
Fig. 22 is a diagram illustrating a footprint when a hydrogen unit according to the present disclosure is used in a house provided with a heat-storage system.

### Description of Embodiments

As a result of intensive studies on heat output using a heat pump cycle using a hydrogen tank that stores a hydrogen storage alloy, the present inventors have conceived the following heat-storage system.

Specifically, a heat-storage system of a first aspect of the present disclosure includes a first tank that stores a first hydrogen storage alloy, a second tank that stores a second hydrogen storage alloy that is different from the first hydrogen storage alloy in dissociation pressure characteristic with respect to an alloy temperature, a heat storage device that stores heat generated in the second hydrogen storage alloy, a hydrogen transfer device configured such that hydrogen is movable between the first hydrogen storage alloy in the first tank and the second hydrogen storage alloy in the second tank, a first heat supply device that supplies heat of a heat source to the first hydrogen storage alloy, a second heat supply device that supplies cold of outside air to the first hydrogen storage alloy, and a controller that executes a first operating mode to heat the first hydrogen storage alloy through the first heat supply device to cause movement of hydrogen from the first hydrogen storage alloy in the first tank to the second hydrogen storage alloy in the second tank, and a second operating mode to cool the first hydrogen storage alloy through the second heat supply device to cause movement of hydrogen from the second hydrogen storage alloy in the second tank to the first hydrogen storage alloy in the first tank.

Here, a dissociation pressure of the first hydrogen storage alloy becomes higher than that of the second hydrogen storage alloy upon receiving supply of heat higher than an outside air temperature at least in the wintertime, and becomes lower than that ofthe second hydrogen storage alloy upon receiving supply of cold of outside air.

In the heat-storage system according to a second aspect of the present disclosure, in the heat-storage system of the first aspect, the hydrogen transfer device may include a first gas pump that sends hydrogen from the first tank to the second tank, and in the first operating mode, the controller may operate the first gas pump when a dissociation pressure of the first hydrogen storage alloy is lower than a dissociation pressure of the second hydrogen storage alloy.

In the heat-storage system according to a third aspect of the present disclosure, in the heat-storage system of the first aspect or the second aspect described above, the hydrogen transfer device may include a second gas pump that sends hydrogen from the second tank to the first tank, and in the second operating mode, the controller may operate the second gas pump when a dissociation pressure of the second hydrogen storage alloy is lower than a dissociation pressure of the first hydrogen storage alloy.

In the heat-storage system according to a fourth aspect of the present disclosure, the heat-storage system of any one of the first aspect to the third aspect described above may further include a water electrolysis apparatus, and a first supply device that supplies hydrogen generated in the water electrolysis apparatus to the first tank, in which in the first operating mode, the controller may control the first supply device to supply hydrogen generated in the water electrolysis apparatus to the first tank.

In the heat-storage system according to a fifth aspect of the present disclosure, the heat-storage system of any one of the first aspect to the third aspect described above may further include a water electrolysis apparatus, and a second supply device that supplies hydrogen generated in the water electrolysis apparatus to the second tank, in which in the first operating mode, the controller may control the second supply device to supply hydrogen generated in the water electrolysis apparatus to the second tank.

In the heat-storage system according to a sixth aspect of the present disclosure, the heat-storage system of any one of the first aspect to the fifth aspect described above may further include a fuel cell apparatus, and a third supply device that supplies hydrogen from the first hydrogen storage alloy in the first tank to the fuel cell apparatus, in which after the first operating mode, the controller may control the third supply device to supply hydrogen from the first hydrogen storage alloy in the first tank to the fuel cell apparatus, and cause the fuel cell apparatus to perform power generation.

In the heat-storage system according to a seventh aspect of the present disclosure, in the heat-storage system of the sixth aspect described above, after supplying hydrogen from the first hydrogen storage alloy in the first tank to the fuel cell apparatus and causing power generation, the controller may execute the second operating mode.

In the heat-storage system according to an eighth aspect of the present disclosure, the heat-storage system of any one of the first aspect to the fifth aspect described above may further include a fuel cell apparatus, and a fourth supply device that supplies hydrogen from the second hydrogen storage alloy in the second tank to the fuel cell apparatus, in which after the second operating mode, the controller may control the fourth supply device to supply hydrogen from the second hydrogen storage alloy in the second tank to the fuel cell apparatus, and cause the fuel cell apparatus to perform power generation.

In the heat-storage system according to a ninth aspect of the present disclosure, the heat-storage system of any one of the first aspect to the fifth aspect described above may further include a fuel cell apparatus, and a third supply device that supplies hydrogen from the first hydrogen storage alloy in the first tank to the fuel cell apparatus, in which when a power failure occurs during execution of either the first operating mode or the second operating mode, the controller may control the third supply device to supply hydrogen from the first hydrogen storage alloy in the first tank to the fuel cell apparatus, and cause the fuel cell apparatus to perform power generation.

In the heat-storage system according to a tenth aspect of the present disclosure, the heat-storage system of any one of the first aspect to the fifth aspect described above may further include a fuel cell apparatus, and a fourth supply device that supplies hydrogen from the second hydrogen storage alloy in the second tank to the fuel cell apparatus, in which when a power failure occurs during execution of either the first operating mode or the second operating mode, the controller may control the fourth supply device to supply hydrogen from the second hydrogen storage alloy in the second tank to the fuel cell apparatus, and cause the fuel cell apparatus to perform power generation.

An operating method of a heat-storage system according to an eleventh aspect of the present disclosure includes the steps of executing a first operating mode to supply heat of a heat source to a first hydrogen storage alloy in a first tank, to cause movement of hydrogen from the first hydrogen storage alloy in the first tank to a second hydrogen storage alloy in a second tank, the second hydrogen storage alloy being different from the first hydrogen storage alloy in dissociation pressure characteristic with respect to an alloy temperature, and executing a second operating mode to supply cold of outside air to the first hydrogen storage alloy, to cause movement of hydrogen from the second hydrogen storage alloy in the second tank to the first hydrogen storage alloy in the first tank, in which the step of executing the first operating mode includes a step of storing a temperature generated in the second hydrogen storage alloy in a heat storage device.

In the operating method of the heat-storage system according to a twelfth aspect of the present disclosure, in the operating method of the heat-storage system of the eleventh aspect, the step of executing the first operating mode may include a step of operating a first gas pump that sends hydrogen from an inside of the first tank to the second tank when a dissociation pressure of the first hydrogen storage alloy is lower than a dissociation pressure of the second hydrogen storage alloy.

In the operating method of the heat-storage system according to a thirteenth aspect of the present disclosure, in the operating method of the heat-storage system of the eleventh aspect or the twelfth aspect, the step of executing the second operating mode may include a step of operating a second gas pump that sends hydrogen from the second tank to the first tank when a dissociation pressure of the second hydrogen storage alloy is lower than a dissociation pressure of the first hydrogen storage alloy.

In the operating method of the heat-storage system according to a fourteenth aspect of the present disclosure, in the operating method of the heat-storage system of any one of the eleventh aspect to the thirteenth aspect, the step of executing the first operating mode may include a step of supplying hydrogen generated in a water electrolysis apparatus to the first tank.

In the operating method of the heat-storage system according to a fifteenth aspect of the present disclosure, in the operating method of the heat-storage system of any one of the eleventh aspect to the fourteenth aspect, the step of executing the first operating mode may include a step of supplying hydrogen generated in a water electrolysis apparatus to the second tank.

The operating method of the heat-storage system according to a sixteenth aspect of the present disclosure may be designed such that the operating method of the heat-storage system of any one of the eleventh aspect to the fifteenth aspect further includes after the step of executing the first operating mode, a step of supplying hydrogen from the first hydrogen storage alloy in the first tank to a fuel cell apparatus, and causing the fuel cell apparatus to perform power generation.

The operating method of the heat-storage system according to a seventeenth aspect of the present disclosure may be designed such that the operating method of the heat-storage system of the sixteenth aspect includes after the step of supplying hydrogen from the first hydrogen storage alloy in the first tank to the fuel cell apparatus and causing the fuel cell apparatus to perform power generation, the step of executing the second operating mode is performed.

The operating method of the heat-storage system according to a eighteenth aspect of the present disclosure may be designed such that the operating method of the heat-storage system of any one of the eleventh aspect to the fifteenth aspect further includes after the step of executing the second operating mode, a step of supplying hydrogen from the second hydrogen storage alloy in the second tank to a fuel cell apparatus, and causing the fuel cell apparatus to perform power generation.

In the operating method of the heat-storage system according to a nineteenth aspect of the present disclosure, in the operating method of the heat-storage system of any one of the eleventh aspect to the fifteenth aspect, either the step of executing the first operating mode or the step of executing the second operating mode may include a step of supplying hydrogen from the first hydrogen storage alloy in the first tank to a fuel cell apparatus and causing the fuel cell apparatus to perform power generation when a power failure occurs.

In the operating method of the heat-storage system according to a twentieth aspect of the present disclosure, in the operating method of the heat-storage system of any one of the eleventh aspect to the fifteenth aspect, either the step of executing the first operating mode or the step of executing the second operating mode may include a step of supplying hydrogen from the second hydrogen storage alloy in the second tank to a fuel cell apparatus and causing the fuel cell apparatus to perform power generation when a power failure occurs.

Hereinafter, embodiments of the present disclosure will be described with reference to the drawings. Note that in the present description and drawings, elements having substantially the same functional configuration are denoted by the same reference numerals, and redundant descriptions are omitted.

### <First Embodiment>

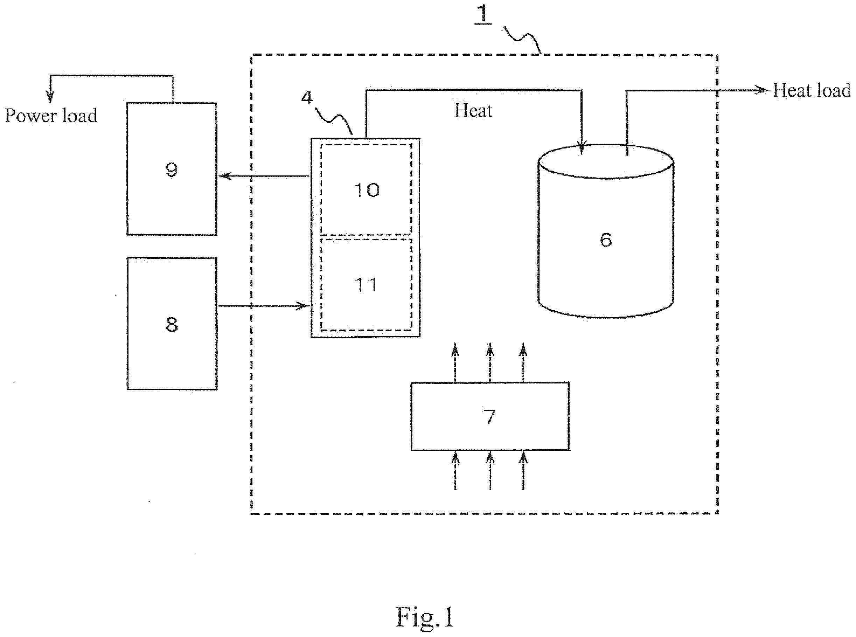

Fig. 1 is a diagram illustrating a schematic configuration of a heat-storage system 1 according to a first embodiment. As illustrated in Fig. 1, the heat-storage system 1 includes a hydrogen unit 4 that includes a tank that stores hydrogen, a hot water storage tank 6 that stores heat supplied from the hydrogen unit 4, and a controller 7 that controls operation of the heat-storage system 1. The controller 7 is configured to execute a hot water supply operation and a regenerative operation described later. The controller 7 may be one having a control function, and includes an arithmetic processing unit (not illustrated) and a storage unit (not illustrated) that stores a control program. Examples of the arithmetic processing unit include an MPU and a CPU. An example of the storage unit is a memory. The controller may be constituted of a single controller that performs centralized control, or may be constituted of a plurality of controllers that perform distributed control in cooperation with each other. Here, the hot water storage tank 6 is an example of a heat storage device of the present disclosure. Further, the controller 7 is an example of a controller of the present disclosure.

In the example illustrated in Fig. 1, the hydrogen unit 4 includes two hydrogen storage alloy tanks 10, 11 as tanks that store hydrogen. The hot water storage tank 6 is configured to supply hot water according to a heat load such as a demand for hot water supply. Further, the hydrogen unit 4 is connected to a water electrolysis apparatus 8 and stores hydrogen generated in the water electrolysis apparatus 8. The hydrogen unit 4 is connected to a fuel cell apparatus 9 and supplies the hydrogen in the hydrogen unit 4 to the fuel cell apparatus 9. The fuel cell apparatus 9 supplies electric power generated using hydrogen to a power load. The fuel cell apparatus 9 includes a fuel cell main body (not illustrated), a power regulator (not illustrated) that adjusts electric power extracted from the fuel cell main body, and a controller (not illustrated) that controls the power regulator. The power regulator is exemplified by an inverter. The hydrogen storage alloy tank 10 is an example of a first tank of the present disclosure, and the hydrogen storage alloy tank 11 is an example of a second tank of the present disclosure.

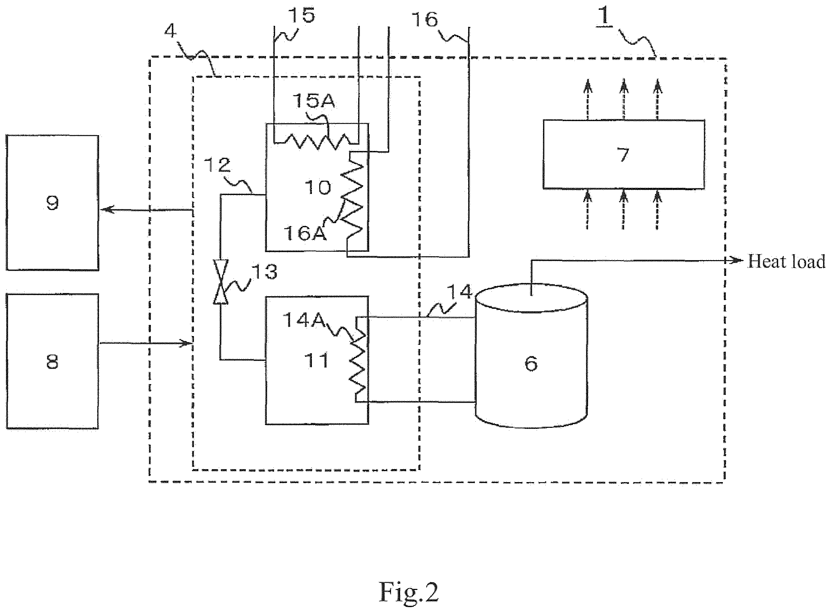

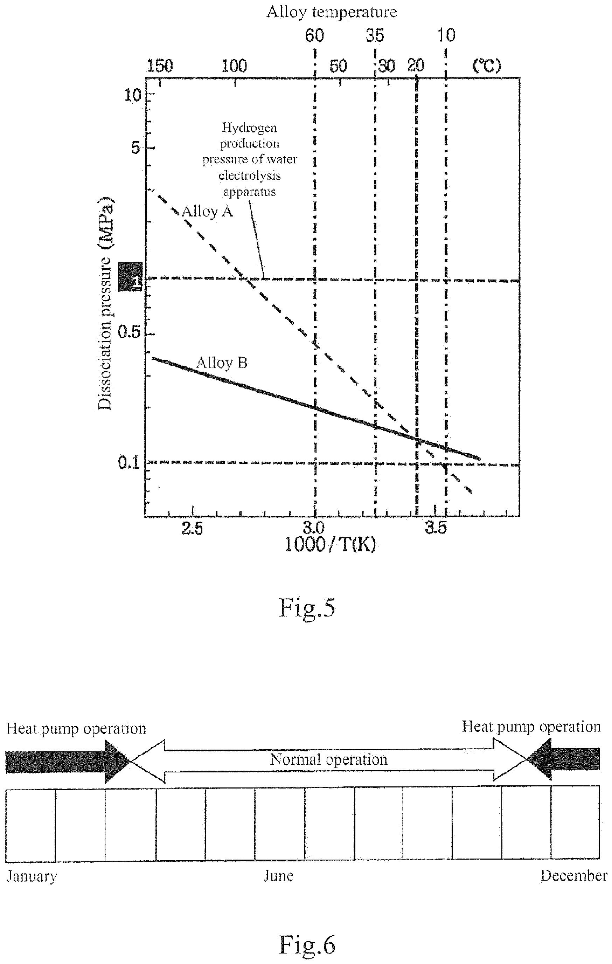

Fig. 2 is a diagram illustrating a more specific example of the heat-storage system in the first embodiment than in Fig. 1. Respective hydrogen storage alloys in the hydrogen storage alloy tanks 10, 11 are alloys having different dissociation pressure characteristics with respect to alloy temperatures (hereinafter, "temperature-dissociation pressure characteristics"). In the first embodiment, respective temperature-dissociation pressure characteristics of the hydrogen storage alloys are different as illustrated in Fig. 5, and the dissociation pressure of a hydrogen storage alloy A (hereinafter referred to as "alloy A") is higher than the dissociation pressure of a hydrogen storage alloy B (hereinafter referred to as "alloy B") when the alloy temperature exceeds 20°C. On the other hand, when the alloy temperature is lower than 20°C, the dissociation pressure of the alloy A is lower than the dissociation pressure of the alloy B. The hydrogen storage alloy A is an example of a first hydrogen storage alloy of the present disclosure. The hydrogen storage alloy B is an example of a second hydrogen storage alloy of the present disclosure.

In other words, in a hot water supply temperature range (for example, 50 to 70°C) that can correspond to a hot water supply load, the dissociation pressure of the alloy A is higher than the dissociation pressure of the alloy B, and in the outside air temperature range (for example, 5 to 10°C) in the wintertime and surrounding periods thereof (for example, November to March), the dissociation pressure of the alloy A is lower than the dissociation pressure of the alloy B. In addition, hydrogen generated in the water electrolysis apparatus 8 can be stored in at least one of the alloy A or the alloy B. At least one of the alloy A or the alloy B that is supplied with hydrogen from the water electrolysis apparatus 8 has a temperature-dissociation pressure characteristic of being lower than a pressure of hydrogen supplied from the water electrolysis apparatus 8 at an alloy temperature during operation of the water electrolysis apparatus 8.

Further, hydrogen can be supplied to the fuel cell apparatus 9 from at least one of the alloy A or the alloy B. At this time, at least one of the alloy A or the alloy B that supplies hydrogen to the fuel cell apparatus 9 has a temperature-dissociation pressure characteristic such that a dissociation pressure at an alloy temperature during power generation of the fuel cell apparatus 9 is, for example, 0.05 MPa (G) or more. In the following description, the first hydrogen storage alloy tank 10 including the alloy A will be referred to as "alloy tank 10", and the second hydrogen storage alloy tank 11 including the alloy B will be referred to as "alloy tank 11".

As illustrated in Fig. 2, one end of a gas flow path 12 is connected to the alloy tank 10, and the other end of the gas flow path 12 is connected to the alloy tank 11. Thus, hydrogen can move between the alloy A in the alloy tank 10 and the alloy B in the alloy tank 11 via the gas flow path 12. Further, the gas flow path 12 is provided with a valve 13. The gas flow path 12 and the valve 13 are examples of a hydrogen transfer device of the present disclosure.

A first heat medium flow path 14 is a flow path through which a first heat medium that recovers heat (warm heat) from the alloy tank 11 flows. The first heat medium flow path 14 is provided with a heat exchanging unit 14A that recovers heat from the alloy tank 11. The first heat medium flow path 14, the heat exchanging unit 14A, and the hot water storage tank 6 are examples of a heat storage device of the present disclosure. The first heat medium may be water in the hot water storage tank 6 or a heat medium different from the water in the hot water storage tank 6. When the first heat medium is different from the water in the hot water storage tank 6, in first heat medium flow path 14, the hot water storage tank 6 is provided with a heat exchanging unit (not illustrated) in which heat is exchanged between the water in the hot water storage tank 6 and the first heat medium. Note that the heat storage device of the present disclosure is not limited to this example, and may further include a secondary heat recovery path that recovers heat from the first heat medium, as in a second embodiment described later. At this time, the first heat medium flow path 14 corresponds to a primary heat recovery path, and the heat exchanging unit 14A corresponds to a heat exchanging unit in which heat is exchanged between the first heat medium in the primary heat recovery path and the alloy B in the alloy tank 11.

A second heat medium flow path 15 is a flow path through which a second heat medium that supplies heat from a heat source to the alloy tank 10 flows. The second heat medium flow path 15 is provided with a heat exchanging unit 15A that supplies heat to the alloy tank 10. Here, the second heat medium flow path 15 and the heat exchanging unit 15A are examples of a first heat supply device of the present disclosure. Further, the heat source may be a heater such as a combustor or an electric heater, or may be exhaust heat generated in the home (for example, remaining hot water of a bathtub), underground heat, or exhaust heat of hot water derived from a solar heat system, hot water derived from solar power generation with a function to utilize solar heat, or the like. Further, the heat supplied from the heat source to the second heat medium may be of a temperature lower than a hot water supply temperature range (for example, 50 to 70°C). Further, the heat source may be an internal heat source provided in the heat-storage system 1, or an external heat source provided outside the heat-storage system 1. Note that the first heat supply device of the present disclosure is not limited to this example, and may further include a secondary heat supply path that supplies heat to the second heat medium, as in a second embodiment described later. At this time, the second heat medium flow path 15 corresponds to a primary heat supply path, and the heat exchanging unit 15A corresponds to a heat exchanging unit in which heat is exchanged between the second heat medium and the alloy A in the alloy tank 10.

A third heat medium flow path 16 is a flow path through which a third heat medium that supplies cold from the outside air to the alloy tank 10 flows. The third heat medium flow path 16 is provided with a heat exchanging unit 16A that supplies cold to the alloy tank 10. The third heat medium flow path 16 and the heat exchanging unit 16A are examples of a second heat supply device of the present disclosure. Note that the second heat supply device of the present disclosure is not limited to this example, and may further include a primary heat supply path that supplies cold to the third heat medium, as in a second embodiment described later. At this time, the third heat medium flow path 16 corresponds to the primary heat supply path, and the heat exchanging unit 16A corresponds to a heat exchanging unit in which heat is exchanged between the third heat medium and the alloy A in the alloy tank 10.

Further, as a first operating mode, the controller 7 performs control to heat the alloy A with the second heat medium flowing through the second heat medium flow path 15 via the heat exchanging unit 15A, and cause movement of hydrogen from the alloy A in the alloy tank 10 to the alloy B in the alloy tank 11.

In addition, as a second operating mode, the controller 7 performs control to cool the alloy B with the third heat medium flowing through the third heat medium flow path 16 via the heat exchanging unit 16A, and cause movement of hydrogen from the alloy B in the alloy tank 11 to the alloy A in the alloy tank 10.

The heat-storage system 1 of the first embodiment is configured as described above. Next, an operating method of the heat-storage system 1 will be described.

The heat-storage system 1 has two operating methods such as a normal operation and a heat pump operation, and the operating method is switched according to the season. For example, as illustrated in Fig. 6, the heat pump operation is performed in the wintertime and surrounding periods thereof, that is, for example, from November to March, and the normal operation is performed in other periods. Switching between the normal operation and the heat pump operation may be performed manually by a user of the heat-storage system 1, or a switching time of operation may be stored in the controller 7 in advance and the operation may be automatically switched when the switching time comes. Further, the operation may be switched automatically based on a measured outside air temperature. Moreover, in this example, the heat pump operation is performed including the surrounding periods of the wintertime, but the heat pump operation may be performed in the wintertime (for example, December to February). That is, it is sufficient that the heat pump operation is performed at least in the wintertime.

First, a flow during the normal operation of the heat-storage system 1 will be described. During the normal operation, hot water is produced by a water electrolysis operation and a fuel cell operation.

### (Normal operation-water electrolysis operation)

In the water electrolysis operation, electric power from a power supply device is supplied to the water electrolysis apparatus 8 to perform electrolysis of water. Hydrogen at less than 1 MPa (G) (for example, 0.9 MPa (G)) produced here is sent to the alloy tank 10. Since the alloy tank 10 generates heat as hydrogen is stored, when exhaust heat thereof is equal to or higher than a temperature that can be used for hot water supply (for example, 60°C), the exhaust heat is used for hot water storage. In this case, heat generated in the alloy A is recovered by a heat medium flowing in a heat medium flow path (not illustrated), and the recovered heat is stored in the hot water storage tank 6. Here, the power supply device may be any power supply device as long as it is capable of supplying power to the water electrolysis apparatus. Examples of the power supply device include a system power supply, a solar power generation apparatus, a power storage apparatus, and the like. The power supply device may be an internal power supply device provided in the heat-storage system 1, or may be an external power supply device provided outside the heat-storage system 1.

Note that hydrogen may be supplied from the water electrolysis apparatus 8 to the alloy tank 11 during the water electrolysis operation. In this case, the first heat medium flows through the first heat medium flow path 14, the heat exchanging unit 14A recovers heat generated in the alloy B, and the recovered heat is stored in the hot water storage tank 6.

### (Normal operation-fuel cell operation)

While the fuel cell apparatus 9 is in operation, for example, hydrogen is supplied from the alloy tank 10 to the fuel cell apparatus 9. At the same time, air in the atmosphere is supplied to the fuel cell apparatus 9 using a blower or the like (not illustrated), and power generation is performed. Heat accompanying power generation of the fuel cell apparatus 9 is recovered by a heat medium flowing in a heat medium flow path (not illustrated), and the recovered heat is stored in the hot water storage tank 6.

Further, hydrogen may be supplied from the alloy tank 11 to the fuel cell apparatus 9. At the same time, air in the atmosphere is supplied to the fuel cell apparatus 9 using the blower or the like (not illustrated), and power generation is performed. Heat accompanying power generation of the fuel cell apparatus 9 is recovered by the heat medium flowing in the heat medium flow path (not illustrated), and the recovered heat is stored in the hot water storage tank 6.

The operating method of heat-storage system 1 during the normal operation has been described. During the normal operation, the water electrolysis operation and the fuel cell operation are alternately repeated to thereby cope with the hot water supply load.

Next, a flow during the heat pump operation will be described. There are two operating methods during the heat pump operation. One is a "hot water supply operation" that extracts heat from a heat source to generate heat for hot water storage, and the other is a "regenerative operation" that returns hydrogen to the tank where the hydrogen is originally stored by reaction heat circulation of both the alloy tanks 10, 11. In a period when it is difficult to achieve energy independence such as, for example, the wintertime and surrounding periods thereof, that is, November to March, the "hot water supply operation" and the "regenerative operation" are alternately repeated to thereby cope with the hot water supply load. Here, the "hot water supply operation" is an example of the first operating mode of the present disclosure. Further, the "regenerative operation" is an example of the second operating mode of the present disclosure.

### (Heat pump operation-hot water supply operation)

First, the hot water supply operation after the regenerative operation is completed will be described. When the regenerative operation is finished, both the alloy tanks 10, 11 are at a low temperature (for example, 10°C). In order to produce hot water in a hot water supply temperature range (for example, 60°C) necessary for hot water supply from this low temperature state, it is necessary to heat both the alloy tanks 10, 11 to a predetermined temperature. Heating of both the alloy tanks 10, 11 during the heat pump operation is performed by supplying heat from the heat source and using an exothermic reaction accompanying hydrogen movement between both the alloy tanks 10, 11.

As illustrated in Fig. 2, heat from the heat source is supplied to the alloy A in the alloy tank 10 from the second heat medium flowing through the second heat medium flow path 15 via the heat exchanging unit 15A. Thus, the alloy A is provided with heat necessary for hydrogen release. The second heat medium that is cooled by heat exchange with the alloy A is supplied again with heat from the heat source, and then supplies heat to the alloy A via the heat exchanging unit 15A.

The temperature of the alloy A in the alloy tank 10 rises due to heat supplied from the heat source, and when the dissociation pressure of the alloy A in the alloy tank 10 becomes higher than the dissociation pressure of the alloy B in the alloy tank 11 accompanying the temperature rise, hydrogen begins to move from the alloy tank 10 to the alloy tank 11 through the gas flow path 12. At this time, the controller 7 controls the valve 13 to open. When hydrogen moves to the alloy tank 11, a hydrogen storage reaction occurs in the alloy B in the alloy tank 11 to generate heat. Heat generated in the alloy tank 11 is transmitted to the first heat medium flowing through the first heat medium flow path 14 via the heat exchanging unit 14A, and finally stored in the hot water storage tank 6.

The alloy B generates heat by the hydrogen storage reaction and is deprived of heat by the first heat medium. However, in the initial stage of the hot water supply operation, since the dissociation pressure difference between the alloy A and the alloy B is large, hydrogen easily moves and the amount of heat generated by the hydrogen storage reaction is large. For this reason, the temperature of the alloy B rises until reaching a steady state. On the other hand, the temperature of the alloy A decreases accompanying a hydrogen release reaction, but the temperature of the alloy A increases until reaching a steady state since the supply of heat from the heat source is continued.

Note that immediately after the hot water supply operation is started, it is necessary to supply more heat from the heat source than in a steady time until temperatures of the alloys A and B in both the alloy tanks 10, 11 reach a design temperature. For this reason, for the amount of heat necessary for the heat source, it is necessary to take into account the amount of sensible heat from a state that the hot water supply operation is started until both the alloy tanks 10, 11 reach a steady temperature, and it is necessary to note that heat of the amount of sensible heat cannot be extracted when the temperature is increased by reaction heat of the alloy. A heat source may be used for heating the alloy B in the alloy tank 11. In this manner, hot water that can be extracted for hot water supply when the same amount of hydrogen moves increases. However, it is necessary to note that the heat amount of the heat source to be secured also increases in that case.

By heating in the initial stage of the hot water supply operation, when the temperature of the alloy A in the alloy tank 10 becomes the temperature of the heat source, 35°C for example, and the temperature of the alloy B in the alloy tank 11 becomes a temperature in the hot water supply temperature range, 60°C for example, and reaches a steady state, the dissociation pressure at the temperature of the heat source of the alloy A in the alloy tank 10 has become higher than the dissociation pressure at the temperature in the hot water supply temperature range of the alloy B in the alloy tank 11. For this reason, during the hot water supply operation, hydrogen continues to move from the alloy tank 10 to the alloy tank 11, and the alloy tank 11 continues to generate heat due to the hydrogen storage reaction. Thus, hot water which has a temperature in the hot water supply temperature range can be produced continuously.

The hot water supply operation during the heat pump operation in the first embodiment is performed in this manner. Next, the regenerative operation after the hot water supply operation is completed will be described.

### (Heat pump operation-regenerative operation)

When the hot water supply operation is finished, the alloys A and B in both the alloy tanks 10, 11 are at high temperatures (for example, 35°C and 60°C). In order to have temperatures necessary for the regenerative operation (for example, 10°C) from this state, it is necessary to first cool the alloys A and B of both the alloy tanks 10, 1 1 to a predetermined temperature. Cooling of the alloys A and B in both the alloy tanks 10, 11 during the heat pump operation is performed by releasing heat to the outside air and using an endothermic reaction accompanying hydrogen movement between both the alloy tanks 10, 11.

Releasing heat to the outside air is performed by that the third heat medium supplied with cold of the outside air flows through the third heat medium flow path 16 and supplies cold to the alloy A in the alloy tank 10 via the heat exchanging unit 16A. The third heat medium heated by heat exchange with the alloy A in the alloy tank 10 is cooled again by outside air, and then supplies cold to the alloy A via the heat exchanging unit 16A.

If the dissociation pressure of the alloy A in the alloy tank 10 becomes smaller than the dissociation pressure of the alloy B in the alloy tank 11 as the alloy A in the alloy tank 10 is cooled, hydrogen begins to move from the alloy tank 11 to the alloy tank 10 through the gas flow path 12. At this time, the controller 7 controls the valve 13 to open. When hydrogen begins to move from the alloy tank 11 to the alloy tank 10, an endothermic reaction accompanying release of hydrogen occurs in the alloy B in the alloy tank 11, and the temperature of the alloy B gradually decreases. On the other hand, the alloy A in the alloy tank 10 causes an exothermic reaction due to hydrogen storage, but since cold is supplied to the alloy A in the alloy tank 10 via the heat exchanging unit 16A, the temperature of the alloy A also gradually decreases.

Note that immediately after the regenerative operation is started, it is necessary to dissipate more heat than in a steady time until temperatures of the alloy tanks 10, 11 reach the design temperature. However, it is only necessary to discard this heat because it is heat that is only to be discarded. When the temperatures of both the alloy tanks 10, 11 reach the design temperature (for example, 10°C), hydrogen can be moved by reaction heat circulation between both the alloy tanks 10, 11. At this time, heat from the heat source may be supplied to the alloy B in the alloy tank 11 from a heat medium flowing through a heat medium path (not illustrated), so that the temperature of the alloy B does not decrease too much.

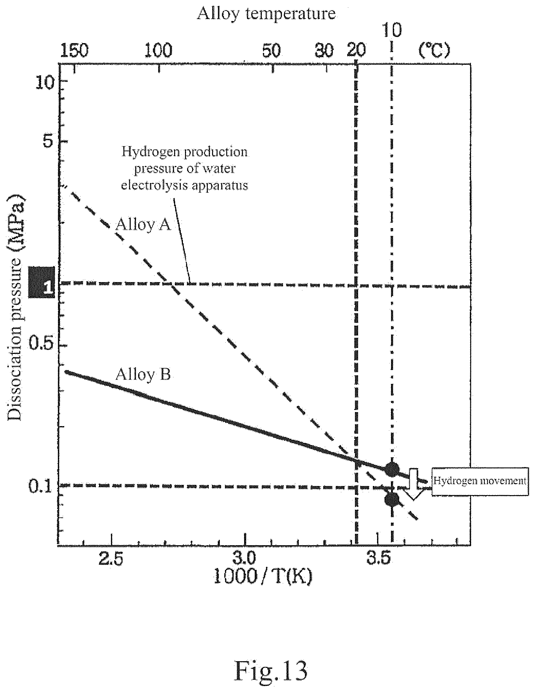

When the temperatures of the alloys A and B in the alloy tanks 10, 11 become steady at, for example, 10°C due to cooling in the initial stage of the regenerative operation, as illustrated in Fig. 13, the dissociation pressure of the alloy A in the alloy tank 10 is smaller than the dissociation pressure of the alloy B in the alloy tank 11. For this reason, hydrogen continues to move from the alloy tank 11 to the alloy tank 10 during the regenerative operation, and hydrogen is stored in the alloy tank 10 for the next hot water supply operation.

The regenerative operation during the heat pump operation in the first embodiment is performed in this manner. After the regenerative operation, the hot water supply operation is performed again to produce hot water. A cycle in which the hot water supply operation and the regenerative operation are repeated alternately is performed at least once a day. For example, the regenerative operation may be performed when the outside air temperature is low at night, and the hot water supply operation may be performed during the day. In addition, this cycle may be performed multiple times a day. For example, when two cycles are performed, the regenerative operation and the hot water supply operation are performed at night, and the regenerative operation and the hot water supply operation are performed during the day. By increasing the number of cycles, it becomes possible to increase the amount of heat that can be used as hot water for hot water supply or the like.

As described above, in the heat-storage system 1 of the first embodiment, by using the alloy A and the alloy B having different temperature-dissociation pressure characteristics of hydrogen storage alloys from each other, during the heat pump operation, hot water can be produced by performing the hot water supply operation using the heat source and the regenerative operation using heat release to the outside air. If the heat source is a heat source that is previously unused or difficult to use, such as exhaust heat generated in the home or underground heat, the heat-storage system 1 can produce hot water more efficiently even in a period when it is difficult to achieve energy independence.

The alloy A used in the alloy tank 10 and the alloy B used in the alloy tank 11 are appropriately selected according to the purpose of using hot water, the temperature of the heat source, the outside air temperature, and so on. For example, an MmNi (Misch Metal Nickel)-based alloy, a TiFe-based alloy, a TiV-based BCC alloy, a TiVCr-based BCC alloy, or a TiCr-based BCC alloy is used. An example of the MmNi-based alloy is an MmNiMn-based alloy. Further, the alloy B in the alloy tank 11 may have a low dissociation pressure in the entire temperature range and may have a pressure change with respect to a temperature change as small as possible.

Note that the lower the temperature zone of heat supplied to the alloy tank 10 needed during the hot water supply operation, the more the choices of available heat sources. Thus, an intersection of the temperature-dissociation pressure characteristics of both the alloys A, B may be lower as long as it does not fall below the temperature during the regenerative operation (the temperature that can be cooled by releasing heat to the outside air). Further, the smaller the difference between the "alloy temperature during hot water supply" and the "alloy temperature during regeneration" on the alloy A side, the lower the sensible heat loss when the operation is switched, and thus the more efficient in terms of energy.

Further, rather than using up all hydrogen for power generation according to electric power demand, power generation is not performed in a specific period to leave the hydrogen even if there is power demand, and low-temperature exhaust heat that cannot be used and has been originally discarded is used to perform the heat pump operation, so as to obtain high-temperature water. Thus, a large amount of hot water can be obtained by up to 70%, compared to cases of not performing the heat pump operation. In addition, by setting the minimum storage amount of hydrogen, the capacity of the hydrogen storage alloy can be reduced by up to 20% per heat pump operation, as compared to the case where the minimum storage amount is not set.

### <Second Embodiment>

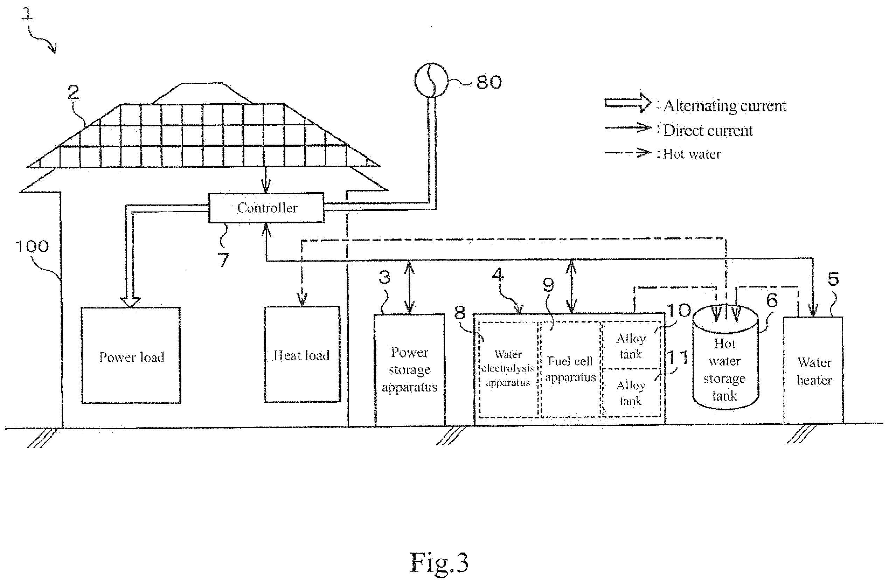

Fig. 3 is a diagram illustrating a schematic configuration of a heat-storage system 1 provided in a house. As illustrated in Fig. 3, the heat-storage system 1 includes a solar power generation apparatus 2, a power storage apparatus 3 such as a lithium ion battery, a hydrogen unit 4 that generates power and produces hot water using hydrogen, a water heater 5 that produces hot water using electric power, a hot water storage tank 6 that temporarily stores hot water supplied from the hydrogen unit 4 and the water heater 5, and a controller 7 that controls operation of the solar power generation apparatus 2, the power storage apparatus 3, the hydrogen unit 4, and the water heater 5, and the hot water storage tank 6. In an example illustrated in Fig. 3, the solar power generation apparatus 2 is provided on the roof of a house 100. The power storage apparatus 3, the hydrogen unit 4, the hot water heater 5, and the hot water storage tank 6 are provided within the same site space as the house 100, and the controller 7 is provided in the house 100. The heat-storage system 1 according to the first embodiment is configured to include the water electrolysis apparatus 8 and the fuel cell apparatus 9 separately from the hydrogen unit 4. In the heat-storage system 1 according to the second embodiment, the hydrogen unit 4 includes a water electrolysis apparatus 8, a fuel cell apparatus 9, and two hydrogen storage alloy tanks (alloy tanks) 10, 11. Further, the hot water storage tank 6 is configured to supply hot water according to a heat load such as a demand for hot water supply in the house 100.

In the heat-storage system 1 according to the second embodiment, electric power generated in the solar power generation apparatus 2 is supplied to a power load of the house 100, and remaining power is supplied to the power storage apparatus 3, or the water electrolysis apparatus 8 of the hydrogen unit 4, or the water heater 5. Still remaining power flows back to the system power 80. If the flowing back is not possible, output suppression or the like is performed. When electric power generated in the solar power generation apparatus 2 is lower than the electric power demand in the home, the electric power from the power storage apparatus 3 or the electric power from the fuel cell apparatus 9 is supplied to the house 100. The controller 7 of the heat-storage system 1 also controls power supply according to such electric power demand. For example, when "electric power of solar power generation < electric power demand" holds, insufficient power is first supplied from the power storage apparatus 3, and if it is still not enough, electric power is supplied by power generation with the fuel cell apparatus 9. The power generation with the fuel cell apparatus 9 is performed not only for responding to power demand, but also for increasing the amount of power stored in the power storage apparatus 3 in preparation for a time zone when the electric power demand is large. For example, charging from the fuel cell apparatus 9 to the power storage apparatus 3 is performed in a time zone when it is not necessary to discharge from the power storage apparatus 3. The reason for charging the power storage apparatus 3 from the fuel cell apparatus 9 in this manner is that the power storage apparatus 3 has better responsiveness than the fuel cell apparatus 9 in response to electric power demand fluctuation or peak electric power demand. Thus, the operating rate of the hydrogen-related devices (the water electrolysis apparatus 8, the fuel cell apparatus 9, and the hydrogen storage alloy tanks 10, 11) is considerably lower than the operating rate of the power storage apparatus 3.

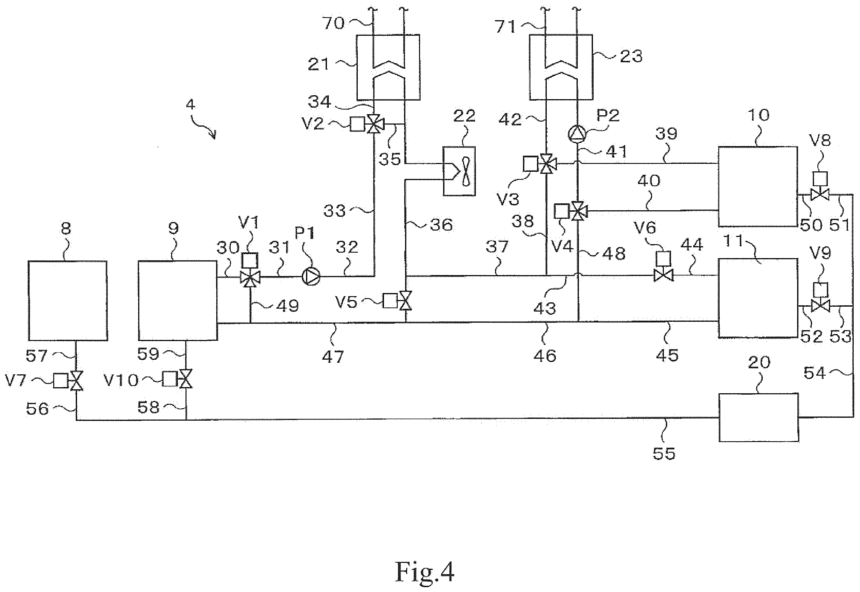

Fig. 4 is a diagram illustrating a schematic configuration of the hydrogen unit 4 in the second embodiment. As described above, the hydrogen unit 4 includes the water electrolysis apparatus 8, the fuel cell apparatus 9, and the two hydrogen storage alloy tanks (alloy tanks) 10, 11. The hydrogen storage alloys (alloys A, B) in the alloy tanks 10, 11 are alloys having different temperature-dissociation pressure characteristics with respect to alloy temperatures. In the second embodiment, the temperature-dissociation pressure characteristics of the hydrogen storage alloys (alloys A, B) differ as illustrated in Fig. 5, and when the alloy temperature exceeds 20°C, the dissociation pressure ofthe alloy A is higher than the dissociation pressure of the alloy B. On the other hand, when the alloy temperature is lower than 20°C, the dissociation pressure of the alloy A is lower than the dissociation pressure of the alloy B.

In other words, in a hot water supply temperature range (for example, 50 to 70°C) that can correspond to a hot water supply load, the dissociation pressure of the alloy A is higher than the dissociation pressure of the alloy B, and in the outside air temperature range (for example, 5 to 10°C) in the wintertime and surrounding periods thereof (for example, November to March), the dissociation pressure of the alloy A is lower than the dissociation pressure of the alloy B. Further, both the alloys A and B have a characteristic that the dissociation pressure at the alloy temperature during the water electrolysis operation is lower than the pressure of hydrogen generated in the water electrolysis apparatus 8 so that the alloys can store hydrogen generated in the water electrolysis apparatus 8. Moreover, both the alloys A and B have a characteristic that the dissociation pressure at the alloy temperature during the fuel cell operation is, for example, 0.05 MPa (G) or more so that the alloys can supply hydrogen to the fuel cell apparatus 9.

As illustrated in Fig. 4, one end of a pipe 50 is connected to the alloy tank 10, and the other end of the pipe 50 is connected to a valve V8. One end of another pipe 51 is connected to the valve V8, and the other end of the pipe 51 is connected to one end of a pipe 54. One end of a pipe 52 is connected to the alloy tank 11, and the other end of the pipe 52 is connected to a valve V9. One end of another pipe 53 is connected to the valve V9, and the other end of the pipe 53 is connected to the pipe 54. The other end of the pipe 54 is connected to a dehumidifier 20. One end of another pipe 55 is connected to the dehumidifier 20, and one end of a pipe 56 is connected to the other end of the pipe 55. The other end of the pipe 56 is connected to a valve V7. One end of another pipe 57 is connected to the valve V7, and the other end of the pipe 57 is connected to the water electrolysis apparatus 8. One end of a pipe 58 is connected to a middle part of the pipe 55, and the other end of the pipe 58 is connected to a valve V10. One end of another pipe 59 is connected to the valve V10, and the other end of the pipe 59 is connected to the fuel cell apparatus 9. Hydrogen flows through the above pipes 50 to 59.

One end of another pipe 30 is connected to the fuel cell apparatus 9, and the other end of the pipe 30 is connected to a three-way valve V1. One end of another pipe 31 is connected to the three-way valve V1, and the other end of the pipe 31 is connected to a pump P1. One end of another pipe 32 is connected to the pump P1, and the other end ofthe pipe 32 is connected to one end of a pipe 33. The other end of the pipe 33 is connected to a three-way valve V2. One end of another pipe 34 is connected to the three-way valve V2, and the pipe 34 extends through a heat exchanger 21 to a radiator 22 with a fan. The other end of a pipe 35 having one end connected to the three-way valve V2 is connected between the heat exchanger 21 and the radiator 22 in the pipe 34. The other end of the pipe 34 is connected to one end of a pipe 36. The other end of the pipe 36 is connected to one end of a pipe 47, and a valve V5 is provided in a middle part of the pipe 36. One end of a pipe 37 is connected to a middle part of the pipe 36, and one end of a pipe 38 is connected to the other end of the pipe 37. The other end ofthe pipe 38 is connected to the three-way valve V3. One end of another pipe 39 is connected to the three-way valve V3, and the other end of the pipe 39 is connected to the alloy tank 10. A heat medium such as water flows in the pipes 30 to 39.

One end of another pipe 40 is connected to the alloy tank 10, and the other end of the pipe 40 is connected to a three-way valve V4. One end of another pipe 41 is connected to the three-way valve V4, and the other end of the pipe 41 is connected to a pump P2. One end of another pipe 42 is connected to the pump P2, and the other end of the pipe 42 is connected to the three-way valve V3 via a heat exchanger 23. One end of another pipe 43 is connected to a connection point between the pipe 37 and the pipe 38, and the other end of the pipe 43 is connected to a valve V6. One end of another pipe 44 is connected to the valve V6, and the other end of the pipe 44 is connected to the alloy tank 11. A heat medium such as water flows in the pipes 40 to 44 described above.

One end of another pipe 45 is connected to the alloy tank 11, and one end of a pipe 46 is connected to the other end of the pipe 45. The other end of the pipe 46 is connected to one end of the pipe 47, and the other end of the pipe 47 is connected to the fuel cell apparatus 9. One end of a pipe 48 is connected to a connection point between the pipe 45 and the pipe 46, and the other end of the pipe 48 is connected to the three-way valve V4. Further, one end of a pipe 49 is connected to a middle part of the pipe 47, and the other end of the pipe 49 is connected to the three-way valve V1. A heat medium such as water flows in the pipes 45 to 49 above.

Inside the heat exchanger 21, a pipe 70 leading to the hot water storage tank 6 is passed, and water flowing in the pipe 70 exchanges heat with the heat medium in the pipe 34 in the heat exchanger 21. Inside the heat exchanger 23, a pipe 71 leading to an external heat source (not illustrated) is passed, and a heat medium flowing in the pipe 71 exchanges heat with the heat medium in the pipe 42 in the heat exchanger 23. Note that the "external heat source" refers to a heat source that is not normally used such as exhaust heat generated in the home, or underground heat, and does not include a heating device provided for the purpose of heating a hydrogen storage alloy tank. As the external heat source, for example, various energy sources can be used including unused energy of remaining hot water of a domestic bathtub (for example, 35°C), underground heat, hot water derived from a solar heat system, hot water derived from solar power generation with a function to utilize solar heat, and wastewater. Further, a plurality of external heat sources may be combined, or tap water may be used depending on the alloy specifications. Although a heat medium may be heated using a heat source other than the external heat source, the external heat source as those described above may be used from the viewpoint of producing hot water with higher energy efficiency.

By the hydrogen unit 4 having the piping configuration described above, in the heat-storage system 1, a device that supplies hydrogen (hereinafter, "hydrogen supply device") from the water electrolysis apparatus 8 to at least one of the alloy tanks 10, 11 is formed by the water electrolysis apparatus 8, both the alloy tanks 10, 11, and the pipes 50 to 57 that connect them to each other.

Further, in the heat-storage system 1, by the pipes 40, 48, 46, 47, 49, 31 to 39 provided so that the heat medium circulates between the alloy tank 10 and the heat exchanger 21 and by the pipes 45 to 47, 49, 31 to 37, 43, 44 provided so that the heat medium circulates between the alloy tank 11 and the heat exchanger 21, a device that gives heat generated in at least one of both the alloy tanks 10, 11 to water supplied from the outside through the heat exchanger 21 is formed (hereinafter referred to as "first heat supply device").

Further, in the heat-storage system 1, by the fuel cell apparatus 9, both the alloy tanks 10, 11, and the pipes 50 to 55, 58, 59 that connect them to each other, and by the pipes 30 to 36, 47 provided so that the heat medium circulates between the fuel cell apparatus 9 and the heat exchanger 21, a device that supplies hydrogen from at least one of both the alloy tanks 10, 11 to the fuel cell apparatus 9, and gives heat accompanying fuel cell power generation to water supplied from the outside through the heat exchanger 21 is formed (hereinafter referred to as "second heat supply device").

In addition, in the heat-storage system 1, a device in which hydrogen can move between both the alloy tanks 10, 11 is formed by the alloy tank 10, the alloy tank 11, and the pipes 50 to 54 connecting them (hereinafter referred to as "hydrogen transfer device").

Further, in the heat-storage system 1, a heat circulation device (first heat supply device and second heat supply device) is formed that heats or cools a heat medium and circulates the heat medium through the hydrogen storage alloy tank (the alloy tanks 10, 11). In the present embodiment, as a heat circulation device that heats a heat medium and circulates the heat medium through a hydrogen storage alloy tank, a device (first heat supply device) is formed in which the pipes 40 to 42, 39 are provided so that the heat medium circulates between the alloy tank 10 and the heat exchanger 23, so as to circulate the heat medium having exchanged heat with the external heat source through the heat exchanger 23 to pass through the alloy tank 10. In addition, as a heat circulation device that cools a heat medium and circulates the heat medium through a hydrogen storage alloy tank, a device (second heat supply device) is formed in which the pipes 40, 48, 46, 47, 49, 31 to 39 are provided so that the heat medium circulates between the alloy tank 10 and the radiator 22, and the pipes 45 to 47, 49, 31 to 37, 43, 44 are provided so that the heat medium circulates between the alloy tank 11 and the radiator 22, so as to circulate the heat medium having exchanged heat with the outside air through the radiator 22 to pass through both the alloy tanks 10, 11.

Note that the configurations of the hydrogen supply device, the first heat supply device, the hydrogen transfer device, the first heat supply device, and the second heat supply device are not limited to the piping configuration described in the second embodiment. For example, in the second embodiment, the hydrogen supply device and the first heat supply device share part of the piping through which hydrogen passes, but other piping may be used.

The heat-storage system 1 of the second embodiment is configured as described above. Next, an operating method of the heat-storage system 1 of the second embodiment will be described.

The heat-storage system 1 of the second embodiment has two operating methods such as a normal operation and a heat pump operation, and the operating method is switched according to the season. For example, as illustrated in Fig. 6, the heat pump operation is performed in the wintertime and surrounding periods thereof, that is, for example, from November to March, and the normal operation is performed in other periods. Switching between the normal operation and the heat pump operation may be performed manually by a user of the heat-storage system 1, or a switching time of operation may be stored in the controller 7 in advance and the operation may be automatically switched when the switching time comes. Further, the operation may be switched automatically based on a measured outside air temperature.

First, a flow during the normal operation of the heat-storage system 1 of the second embodiment will be described. During the normal operation, hot water is produced by a water electrolysis operation and a fuel cell operation.

### (Normal operation-water electrolysis operation)

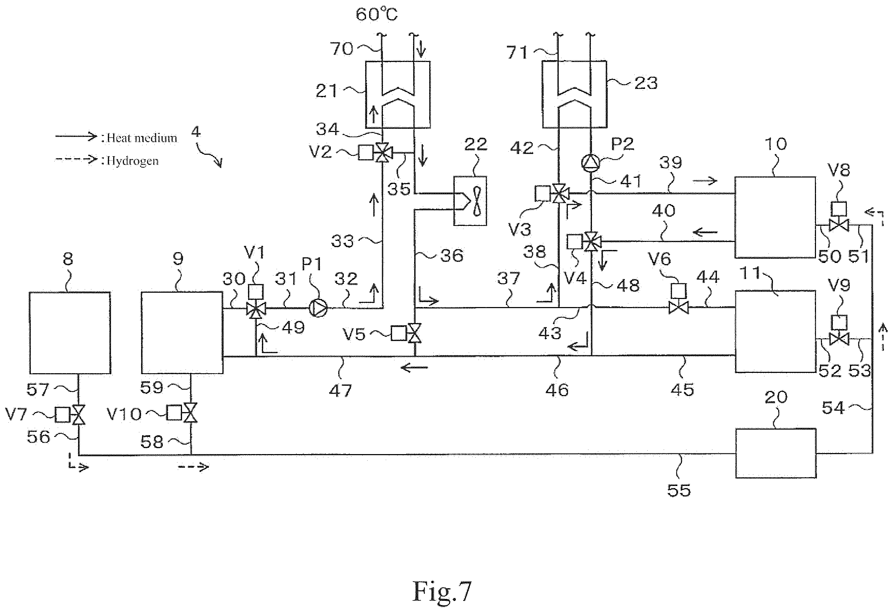

In the water electrolysis operation, electric power from the solar power generation apparatus 2 (Fig. 3) is supplied to the water electrolysis apparatus 8 to perform electrolysis of water. Hydrogen produced here at less than 1 MPa (G) (for example, 0.9 MPa (G)) is sent to the dehumidifier 20 through the pipe 57, the valve V7, and the pipes 56, 55 as illustrated in Fig. 7. Hydrogen whose dew point is decreased therein is sent to the alloy tank 10. At this time, the valve V8 is opened. Here, the valves V7 and V8 are examples of a first supply device of the present disclosure. Since the alloy tank 10 generates heat as hydrogen is stored, if exhaust heat thereof is equal to or higher than a temperature that can be used for hot water supply (for example, 60°C), the exhaust heat is used in the heat exchanger 21 for hot water storage. In this case, the heat medium having recovered heat generated by a hydrogen storage reaction is sent to the pipe 40, the three-way valve V4, the pipes 48, 46, 47, 49, the three-way valve V1, the pipe 31, the pump P1, the pipes 32, 33, the three-way valve V2, and the pipe 34, and exchanges heat with water in the pipe 70 in the heat exchanger 21. The heat medium that is cooled here is returned from the pipe 34 to the alloy tank 10 through the radiator 22, the pipes 36, 37, 38, the three-way valve V3, and the pipe 39, and recovers heat again. The radiator 22 operates appropriately as necessary.

Note that hydrogen may be supplied from the water electrolysis apparatus 8 to the alloy tank 11 during the water electrolysis operation. In this case, the hydrogen produced by the water electrolysis apparatus 8 is sent to the alloy tank 11 via the pipe 57, the valve V7, the pipes 56, 55, the dehumidifier 20, the pipes 54, 53, the valve V9, and the pipe 52. Here, the valves V7 and V9 are examples of a second supply device of the present disclosure. The heat medium having recovered heat generated in the alloy tank 11 is sent to the pipes 45, 46, 47, 49, the three-way valve V1, the pipe 31, the pump P1, the pipes 32, 33, the three-way valve V2, and the pipe 34, and exchanges heat with water in the pipe 70 in the heat exchanger 21. The heat medium that is cooled here is returned to the alloy tank 11 from the pipe 34 through the radiator 22, the pipes 36, 37, 43, the valve V6, and the pipe 44, and recovers heat again. The radiator 22 operates appropriately as necessary.

### (Normal operation-fuel cell operation)

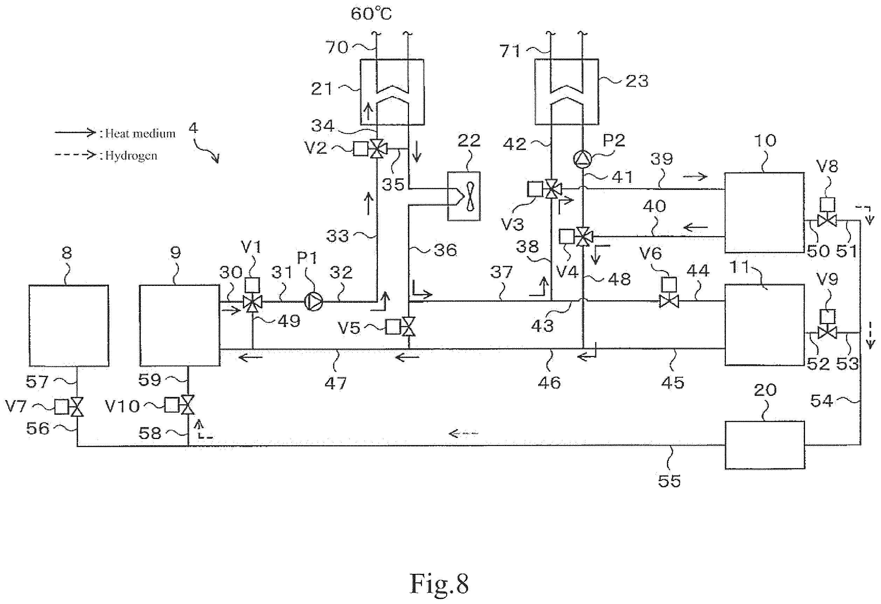

During operation of the fuel cell apparatus 9, for example, as illustrated in Fig. 8, hydrogen is supplied from the alloy tank 10 to the fuel cell apparatus 9 through the pipe 50, the valve V8, the pipes 51, 54, the dehumidifier 20, the pipes 55, 58, the valve V10, and the pipe 59. At the same time, air in the atmosphere is supplied to the fuel cell apparatus 9 using the blower or the like (not illustrated), and power generation is performed. The controller 7 instructs a controller (not illustrated) in the fuel cell apparatus 9 to perform power generation during actual operation. In response to this instruction, the controller (not illustrated) in the fuel cell apparatus 9 causes the fuel cell apparatus 9 to perform power generation. Here, the valves V8 and V10 are examples of a third supply device of the present disclosure. Note that when hydrogen passes through the dehumidifier 20, moisture adsorbed during dehumidification can be removed by heating the dehumidifier 20 to, for example, about 200°C with an electric heater or the like. Thus, the dehumidifier 20 can exhibit a predetermined dehumidifying performance even during the next water electrolysis operation. The heat medium having recovered heat generated by fuel cell power generation passes through the pipe 30, the three-way valve V1, the pipe 31, the pump P1, the pipes 32, 33, the three-way valve V2, and the pipe 34, and exchanges heat with water in the pipe 70 through the heat exchanger 21. Thereafter, the heat medium in the pipe 34 is sent to the alloy tank 10 through the radiator 22, the pipes 36, 37, 38, the three-way valve V3, and the pipe 39, and is used for heat absorption when the alloy A releases hydrogen. Thereafter, the heat medium is sent from the alloy tank 10 to the fuel cell apparatus 9 through the pipe 40, the three-way valve V4, and the pipes 48, 46, 47, and recovers heat again.

Note that when heating for hot water storage is not necessary, a fan of the radiator 22 is turned on, and heat whose amount is equal to or larger than the amount to be supplied to the alloy is released to the atmosphere. Further, when hydrogen is supplied from the alloy tank 11 to the fuel cell apparatus 9, the hydrogen is sent to the dehumidifier 20 through the pipe 52, the valve V9, and the pipes 53, 54, and hydrogen is supplied through the pipes 55, 58, the valve V10, and the pipe 59. Here, the valves V9 and V10 are examples of a fourth supply device of the present disclosure. In addition, the heat medium having recovered heat accompanying power generation of the fuel cell apparatus 9 passes through the pipe 30, the three-way valve V1, the pipe 31, the pump P1, the pipes 32, 33, the three-way valve V2, and the pipe 34, and exchanges heat with water in the pipe 70 through the heat exchanger 21. The heat medium having finished heat exchange in the heat exchanger 21 is sent to the alloy tank 11 through the pipe 34, the radiator 22, the pipes 36, 37, 43, the valve V6, and the pipe 44, and is used for heat absorption when the hydrogen storage alloy (alloy B) releases hydrogen. Thereafter, the heat medium is sent from the alloy tank 11 to the fuel cell apparatus 9 via the pipes 45, 46, 47, and recovers heat again. The radiator 22 is appropriately operated as necessary.

The operating method of heat-storage system 1 during the normal operation has been described. During the normal operation, the water electrolysis operation and the fuel cell operation are alternately repeated to thereby cope with the hot water supply load.

Next, a flow during the heat pump operation will be described. There are two operating methods during the heat pump operation. One is a "hot water supply operation" that extracts heat from an external heat source to generate heat for hot water storage, and the other is a "regenerative operation " that returns hydrogen to the tank where the hydrogen is originally stored by reaction heat circulation of both the alloy tanks 10, 11. Here, the "hot water supply operation" is an example of the first operating mode of the present disclosure. Further, the "regenerative operation" is an example of the second operating mode of the present disclosure. In a period when it is difficult to achieve energy independence such as, for example, the wintertime and surrounding periods thereof, that is, November to March, the "hot water supply operation" and the "regenerative operation" are alternately repeated to thereby cope with the hot water supply load.

### (Heat pump operation-hot water supply operation)

First, the hot water supply operation after the regenerative operation is completed will be described. When the regenerative operation is finished, both the alloy tanks 10, 11 are at a low temperature (for example, 10°C). In order to produce hot water in the hot water supply temperature range (for example, 60°C) necessary for hot water supply from the above state, it is necessary to heat both the alloy tanks 10, 11 to a predetermined temperature. Heating of both the alloy tanks 10, 11 during the heat pump operation is performed by recovering heat from the external heat source and using an exothermic reaction accompanying hydrogen movement between both the alloy tanks 10, 11.

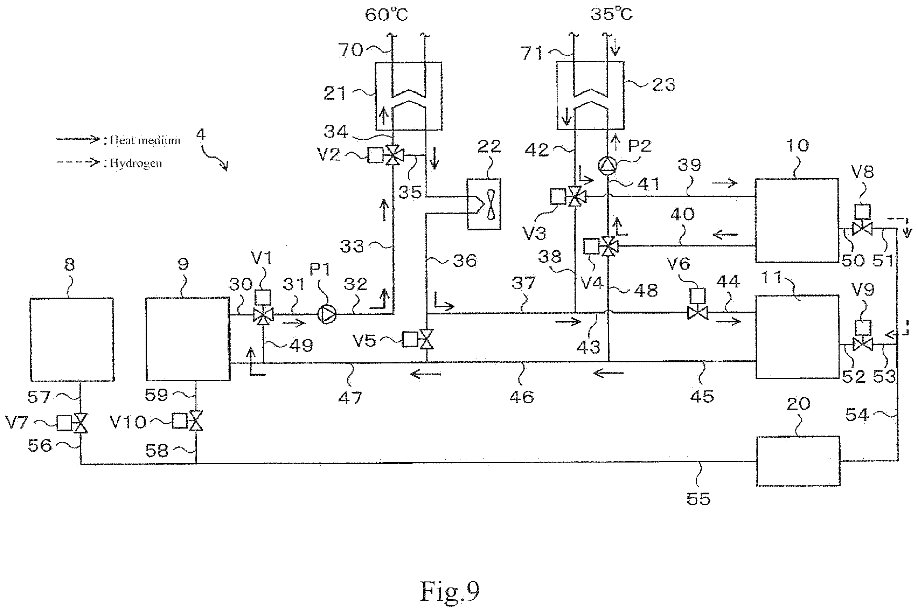

As illustrated in Fig. 9, heat from the external heat source is recovered from the heat medium in the pipe 71 through the heat exchanger 23. The heat medium in the pipe 42 having recovered the heat of the external heat source is sent to the alloy tank 10 via the three-way valve V3 and the pipe 39, and thus heat necessary for releasing hydrogen is given to the alloy tank 10. The heat medium cooled by heat exchange with the alloy tank 10 is sent to the heat exchanger 23 via the pipe 40, the three-way valve V4, the pipe 41, and the pump P2, and recovers heat again from the external heat source.

The temperature of the alloy A in the alloy tank 10 rises due to the heat supplied from the external heat source, and when the dissociation pressure of the alloy A in the alloy tank 10 becomes higher than the dissociation pressure of the alloy B in the alloy tank 11 as the temperature rises, hydrogen begins to move from the alloy tank 10 to the alloy tank 11 through the pipe 50, the valve V8, the pipes 51, 53, the valve V9, and the pipe 52. Accompanying the movement, a hydrogen storage reaction occurs in the alloy B in the alloy tank 11 to generate heat. The heat generated in the alloy tank 11 is sent to the pipes 45, 46, 47, 49, the three-way valve V1, the pipe 31, the pump P1, the pipes 32, 33, the three-way valve V2, the pipe 34, and the heat exchanger 21 through the heat medium, and heat exchange with a heat medium in the pipe 70 leading to the hot water storage tank 6 is performed. The heat medium after exchanging heat is sent to the alloy tank 11 through the pipe 34, the radiator 22, the pipes 36, 37, 43, the valve V6, and the pipe 44, and recovers heat again in the tank.

The alloy B in the alloy tank 11 generates heat due to the hydrogen storage reaction, and heat is taken away by the heat medium passing through the alloy tank 11. However, in the initial stage of the hot water supply operation, since the dissociation pressure difference between the alloy A and the alloy B is large, hydrogen easily moves and the amount of heat generated by the hydrogen storage reaction is large. Accordingly, the temperature of the alloy B in the alloy tank 11 increases until reaching a steady state. On the other hand, the temperature of the alloy A in the alloy tank 10 decreases accompanying a hydrogen release reaction, but since the heat medium having recovered heat of the external heat source in the heat exchanger 23 circulates through the alloy tank 10, the temperature rises until reaching a steady state.

Note that immediately after the hot water supply operation is started, it is necessary to recover more heat from the external heat source than in a steady time until temperatures of the alloys A and B in the alloy tanks 10, 11 reach a design temperature. For this reason, for the amount of heat necessary for the external heat source, it is necessary to take into account the amount of sensible heat from a state that the hot water supply operation is started until both the alloy tanks 10, 11 reach a steady temperature, and it is necessary to note that heat of the amount of sensible heat cannot be extracted when the temperature is increased by reaction heat of the alloy. Note that an external heat source may be used for heating the alloy B in the alloy tank 11. In this manner, hot water that can be extracted for hot water supply when the same amount of hydrogen moves increases. In this case, however, it is necessary to note that the amount of heat of the external heat source to be secured also increases.

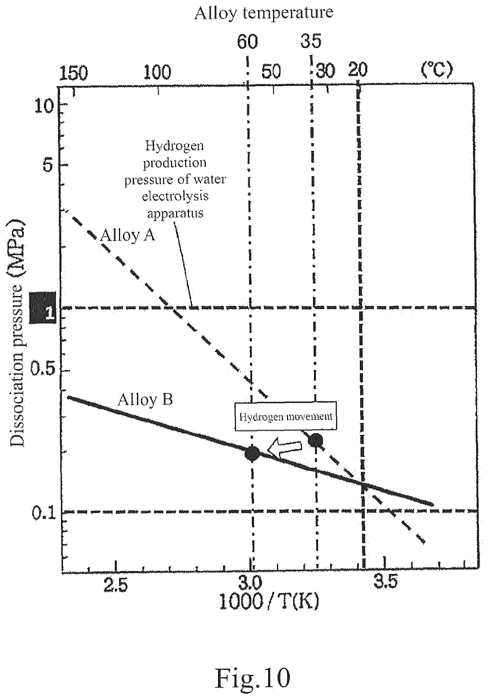

By heating in the initial stage of the hot water supply operation, as illustrated in Fig. 10, when the temperature of the alloy A in the alloy tank 10 becomes the temperature of the external heat source, 35°C for example, and the temperature of the alloy B in the alloy tank 11 becomes a temperature in the hot water supply temperature range, 60°C for example, and reaches a steady state, the dissociation pressure at the temperature of the external heat source of the alloy A in the alloy tank 10 has become higher than the dissociation pressure at the temperature in the hot water supply temperature range of the alloy B in the alloy tank 11. For this reason, during the hot water supply operation, hydrogen continues to move from the alloy tank 10 to the alloy tank 11, and the alloy tank 11 continues to generate heat due to the hydrogen storage reaction. Thus, hot water which has a temperature in the hot water supply temperature range can be produced continuously.

The hot water supply operation during the heat pump operation in the second embodiment is performed in this manner. Next, the regenerative operation after the hot water supply operation is completed will be described.

### (Heat pump operation-regenerative operation)

When the hot water supply operation is finished, the alloys A and B in both the alloy tanks 10, 11 are at high temperatures (for example, 35°C and 60°C). In order to have temperatures necessary for the regenerative operation (for example, 10°C) from this state, it is necessary to first cool the alloys A and B of both the alloy tanks 10, 1 1 to a predetermined temperature. Cooling of the alloys A and B in both the alloy tanks 10, 11 during the heat pump operation is performed by releasing heat to the outside air and using an endothermic reaction accompanying hydrogen movement between both the alloy tanks 10, 11.

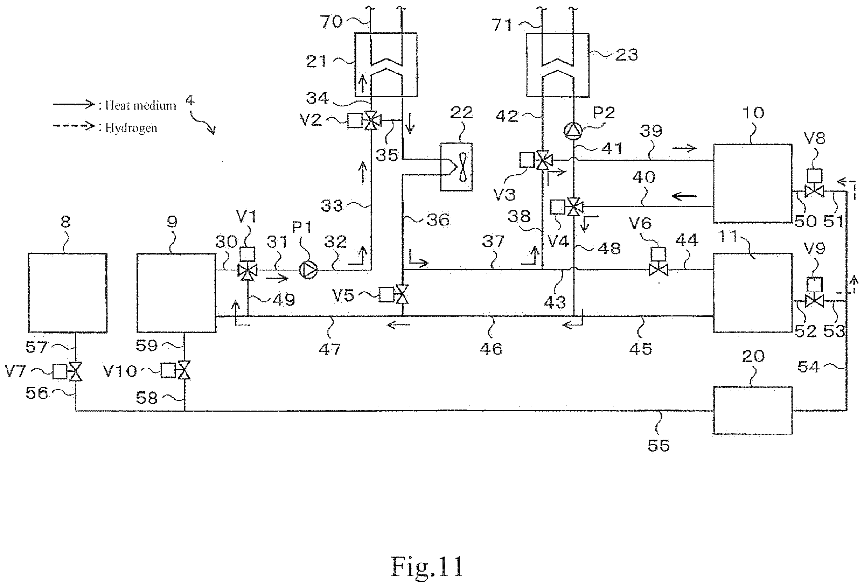

Releasing heat to the outside air is performed by heat exchange between the heat medium in the pipe and the outside air via the radiator 22. Then, the heat medium cooled by the radiator 22 is sent to the alloy tank 10 via the pipes 36, 37, 38, the three-way valve V3, and the pipe 39 as illustrated in Fig. 11. Thus, the alloy A in the alloy tank 10 is cooled. The heat medium heated by heat exchange with the alloy tank 10 is sent to the pipe 40, the three-way valve V4, the pipes 48, 46, 47, 49, the three-way valve V1, the pipe 31, the pump P1, the pipes 32, 33, the three-way valve V2, the pipe 34, and the radiator 22, and is cooled again by the outside air.

Then, when the dissociation pressure of the alloy A in the alloy tank 10 becomes smaller than the dissociation pressure of the alloy B in the alloy tank 11 accompanying cooling of the alloy A in the alloy tank 10, hydrogen begins to move from the alloy tank 11 to the alloy tank 10 through the pipe 52, the valve V9, the pipes 53, 51, the valve V8, and the pipe 50. Consequently, an endothermic reaction accompanying release of hydrogen occurs in the alloy B in the alloy tank 11, and the temperature of the alloy B in the alloy tank 11 gradually decreases. On the other hand, the alloy A in the alloy tank 10 causes an exothermic reaction due to hydrogen storage, but since the heat medium cooled by the outside air circulates through the alloy tank 10 through the radiator 22, the temperature of the alloy A in the alloy tank 10 also decreases gradually.

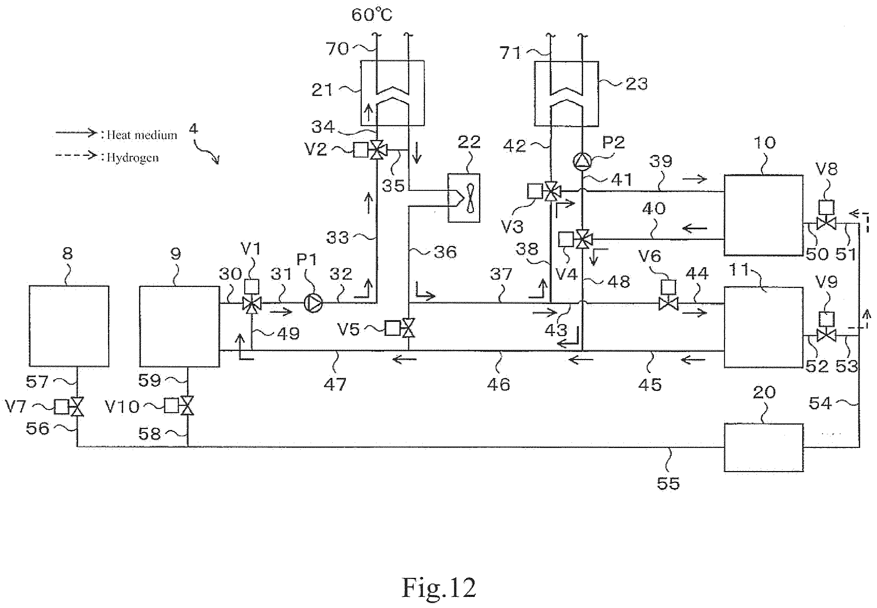

Note that immediately after the regenerative operation is started, it is necessary to dissipate more heat than in a steady time until temperatures of the alloy tanks 10, 11 reach the design temperature. However, it is only necessary to discard this heat because it is heat that is only to be discarded. When the temperatures of both the alloy tanks 10, 11 reach the design temperature (for example, 10°C), hydrogen can be moved by reaction heat circulation between both the alloy tanks 10, 11. Therefore, the valve V6 may be opened to circulate the heat medium through the alloy tank 11 as illustrated in Fig. 12, so that the temperature of the alloy tank 11 does not drop too much. When it is no longer necessary to discard heat to the outside, the fan of the radiator 22 may be stopped. Of course, the valve V6 may be opened from the beginning of the regenerative operation to release heat.

When the temperatures of the alloys A and B in the alloy tanks 10, 11 become steady at, for example, 10°C due to cooling in the initial stage of the regenerative operation, as illustrated in Fig. 13, the dissociation pressure of the alloy A in the alloy tank 10 is smaller than the dissociation pressure of the alloy B in the alloy tank 11. For this reason, hydrogen continues to move from the alloy tank 11 to the alloy tank 10 during the regenerative operation, and hydrogen is stored in the alloy tank 10 for the next hot water supply operation.

The regenerative operation during the heat pump operation in the second embodiment is performed in this manner. After the regenerative operation, the hot water supply operation is performed again to produce hot water. A cycle in which the hot water supply operation and the regenerative operation are repeated alternately is performed at least once a day. For example, the regenerative operation may be performed when the outside air temperature is low at night, and the hot water supply operation may be performed during the day. In addition, this cycle may be performed multiple times a day. For example, when two cycles are performed, the regenerative operation and the hot water supply operation are performed at night, and the regenerative operation and the hot water supply operation are performed during the day. By increasing the number of cycles, it becomes possible to increase the amount of heat that can be used as hot water for hot water supply or the like.

As described above, in the heat-storage system 1 of the second embodiment, by using the alloy A and the alloy B having different temperature-dissociation pressure characteristics of the hydrogen storage alloys from each other, during the heat pump operation, hot water can be produced by performing the hot water supply operation using the external heat source and the regenerative operation using heat release to the outside air. The external heat source is a heat source that is previously unused or difficult to use, such as exhaust heat generated in the home or underground heat. Thus, according to the heat-storage system 1 of the second embodiment that uses the external heat source, hot water can be more efficiently produced even in the period when it is difficult to achieve energy independence.

Note that the alloy A used in the alloy tank 10 and the alloy B used in the alloy tank 11 are appropriately selected according to the purpose of using hot water, the temperature of the external heat source, the outside air temperature, and so on. For example, an MmNi-based alloy, a TiFe-based alloy, a TiV-based BCC alloy, a TiVCr-based BCC alloy, a TiCr-based BCC alloy, or the like is used. Further, the alloy B in the alloy tank 11 may have a low dissociation pressure in the entire temperature range and may have a pressure change with respect to a temperature change as small as possible.

Note that the lower the temperature zone of heat supplied to the alloy tank 10 needed during the hot water supply operation, the more the choices of available external heat sources. Thus, an intersection of the temperature-dissociation pressure characteristics of both the alloys A, B may be lower as long as it does not fall below the temperature during the regenerative operation (the temperature that can be cooled by heat release to the outside air). Further, the smaller the difference between the "alloy temperature during hot water supply" and the "alloy temperature during regeneration" on the alloy A side, the lower the sensible heat loss when the operation is switched, and thus the more efficient in terms of energy.

Further, rather than using up all hydrogen for power generation according to electric power demand, power generation is not performed in a specific period to leave the hydrogen even if there is power demand, and low-temperature exhaust heat that cannot be used and has been originally discarded is used to perform the heat pump operation, so as to obtain high-temperature water. Thus, a large amount of hot water can be obtained by up to 70%, compared to cases of not performing the heat pump operation. In addition, by providing the minimum storage amount of hydrogen, the capacity of the hydrogen storage alloy can be reduced by up to 20% per heat pump operation, as compared to the case where the minimum storage amount is not provided.

### <Third Embodiment>

A heat-storage system 1 of a third embodiment is configured similarly to the heat-storage system 1 ofthe second embodiment, but differs in hot water supply operation method during a heat pump operation. In the third embodiment, a hot water supply operation during the day when surplus power of solar power generation occurs even in a period when it is difficult to achieve energy independence will be described.

### (Heat pump operation-hot water supply operation)

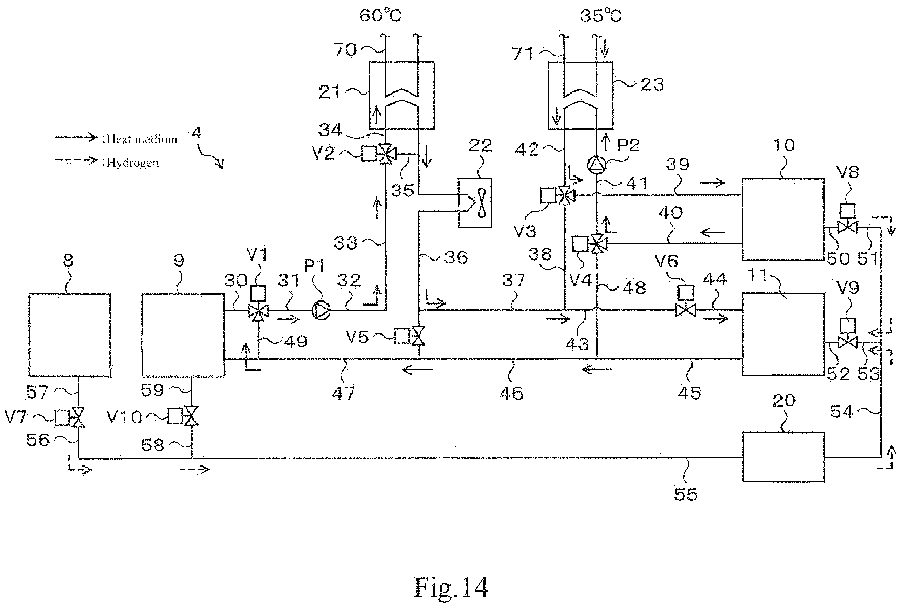

Fig. 14 is a flow diagram of a hot water supply operation during a heat pump operation in the third embodiment. In the third embodiment, hydrogen is produced by the water electrolysis apparatus 8 using surplus power of solar power generation even during the hot water supply operation ofthe heat pump operation. The hydrogen produced at this time is supplied to the alloy tank 11 via the pipe 57, the valve V7, the pipes 56, 55, the dehumidifier 20, the pipes 54, 53, the valve V9, and the pipe 52. Thus, a storage reaction of hydrogen occurs in the alloy B in the alloy tank 11, and the temperature of the alloy B in the alloy tank 11 rises. On the other hand, also in the third embodiment, hydrogen released from the alloy tank 10 is supplied to the alloy tank 11 during the hot water supply operation, as in the first and second embodiments. Thus, in the hot water supply operation of the third embodiment, since hydrogen is supplied from the alloy tank 10 and the water electrolysis apparatus 8 to the alloy tank 11, even if the amount of hydrogen released from the alloy tank 10 is restricted, the temperature of the alloy B in the alloy tank 11 can be increased. That is, it is not necessary to facilitate hydrogen release from the alloy tank 10 as compared to the case where the alloy B in the alloy tank 11 is heated only with hydrogen supplied from the alloy tank 10. Accordingly, the amount of the heat medium in the pipe 42 that has recovered heat from the external heat source and is to be supplied to the alloy tank 10 can be reduced, and as a result, pump motive power for sending the heat medium can be reduced. Thus, hot water can be produced still more efficiently. Note that when the charging amount of hydrogen in the alloy tank 11 reaches a predetermined charging amount, water electrolysis is stopped, and the system shifts to the regenerative operation.

### <Fourth Embodiment>

In a heat-storage system 1 of a fourth embodiment, a fuel cell operation is performed between a hot water supply operation of a heat pump operation and a regenerative operation.

### (Heat pump operation-hot water supply operation)

The hot water supply operation of the heat pump operation in the fourth embodiment produces hydrogen in the water electrolysis apparatus 8 using surplus power of solar power generation during a hot water supply operation, similarly to the hot water supply operation of the heat pump operation in the third embodiment illustrated in Fig. 14. Further, the hydrogen produced at this time is supplied to the alloy tank 11. However, the heat-storage system 1 according to the fourth embodiment is different in that supply of hydrogen to the alloy tank 10 is started without shifting to the regenerative operation after the hydrogen reaches a predetermined charging amount in the alloy tank 11. When hydrogen is fully charged in the alloy tank 10, water electrolysis is stopped even if there is still surplus power. When hydrogen is stored in both the alloy tanks 10, 11 by the water electrolysis apparatus 8 during the heat pump operation, the alloy tank 10 is fully charged when the hot water supply operation is finished. Thus, hydrogen cannot be moved from the alloy tank 11 to the alloy tank 10, and the regenerative operation cannot be performed. Accordingly, in the fourth embodiment, the fuel cell operation is performed between the hot water supply operation and the regenerative operation.

### (Heat pump operation-fuel cell operation)

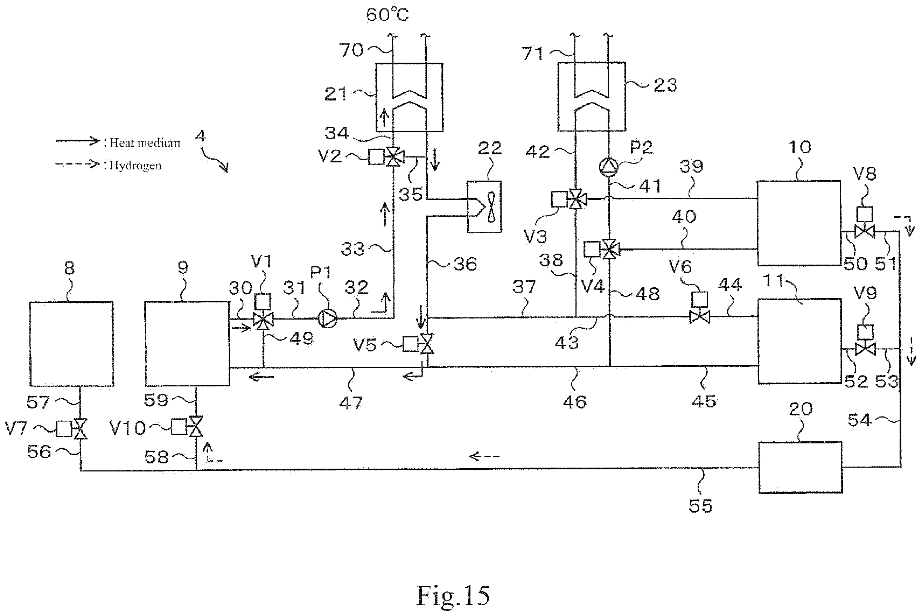

As illustrated in Fig. 15, hydrogen remaining in the alloy tank 10 is sent to the fuel cell apparatus 9 via the pipe 50, the valve V8, the pipes 51, 54, the dehumidifier 20, the pipes 55, 58, the valve V10, and the pipe 59. The hydrogen moved here is used for power generation for power demand when the relationship of "power by solar power generation < electric power demand of house" is satisfied (particularly after the evening). Then, heat generated from the fuel cell apparatus 9 is sent to the pipe 30, the three-way valve V1, the pipe 31, the pump P1, the pipes 32, 33, the three-way valve V2, the pipe 34, and the heat exchanger 21 through the heat medium, and heat exchange with water in the pipe 70 is performed. Thus, hot water is produced. Thereafter, the heat medium in the pipe 34 is sent to the fuel cell apparatus 9 through the radiator 22, the pipe 36, the valve V5, and the pipe 47, and recovers heat again. Note that if the hot water storage tank 6 has sufficient capacity and hot water can be stored in the hot water storage tank 6, heat generated from the fuel cell apparatus 9 may be used for production of hot water as described above, but if the hot water cannot be stored, the heat may be released by the radiator 22.

During the fuel cell operation, the temperature of the alloy tank 10 decreases due to an endothermic reaction accompanying release of hydrogen. Thus, it is possible to reduce motive power and cold for cooling the alloy tank 10 required for the regenerative operation after the fuel cell operation, and it is possible to produce hot water more efficiently.

As a method of using hydrogen stored in the alloy tank 10, it is conceivable that remaining hydrogen in the alloy tank 10 is retained as it is in order to reduce the amount of hydrogen that moves during the regenerative operation. In this case, motive power and heat release to the outside air necessary for the regenerative operation can be reduced, but since hydrogen remains in the alloy tank 11 when the regenerative operation is finished, there is a risk that sufficient hydrogen cannot be moved during the next hot water supply operation, and the amount of heat necessary for hot water supply cannot be obtained. Here, as the amount of heat per unit amount of hydrogen obtained from one of alloys accompanying hydrogen movement between the alloys and the amount of heat per unit amount of hydrogen generated accompanying fuel cell power generation, the amount of heat accompanying the fuel cell power generation is about 4 times larger. Thus, when there is surplus hydrogen in the alloy tank 11, by performing the fuel cell power generation using hydrogen in the alloy tank 11, and performing heating for hot water storage and heating of the alloy tank 11 as necessary while covering the electric power demand of the house, a necessary amount of stored hot water can be secured without performing the hot water supply operation. Of course, depending on the remaining amount of hydrogen in the alloy tank 11, by combining the fuel cell operation and the hot water supply operation, a necessary amount of stored hot water can be secured.

In this way, the method of using hydrogen stored more than necessary is basically using when the amount of solar generated power is less than the electric power demand of the house, and using as fuel for fuel cell operation instead of hot water supply operation is most suitable. Note that even if hot water storage is completed, as long as there is electric power demand, power generation with surplus amount of hydrogen may be continued, and when the surplus runs out, the fuel cell operation is finished regardless of the electric power demand. Further, it is not necessary to forcibly consume the surplus hydrogen, and there is no problem in moving hydrogen between the tanks any number of times while the hot water supply operation and the regenerative operation are repeated.

### <Fifth Embodiment>

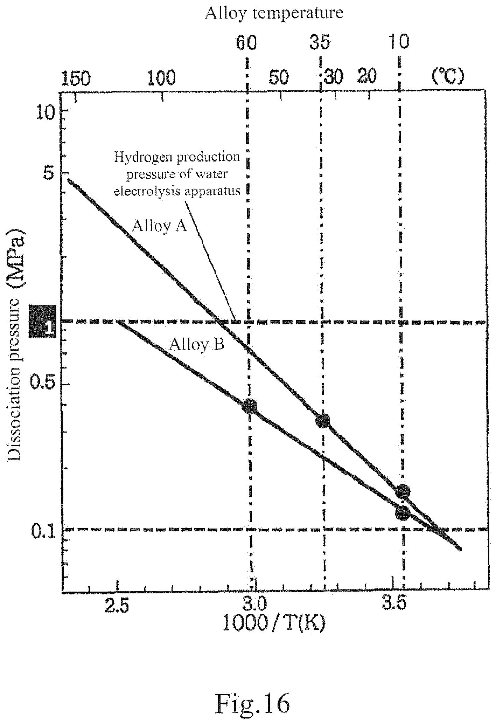

In a fifth embodiment, a heat-storage system 1 in a case where temperature-dissociation pressure characteristics of the alloy A in the alloy tank 10 and the alloy B in the alloy tank 11 are similar to each other as illustrated in Fig. 16 will be described. The dissociation pressure of the alloy A is higher than the dissociation pressure of the alloy B over the entire temperature range. Thus, for example, even when the temperature of the alloy tank 10 becomes 35°C and the temperature of the alloy tank 11 becomes 60°C as in the hot water supply operation of the first embodiment and the second embodiment, the dissociation pressure of alloy A is lower than the dissociation pressure of alloy B, and thus hydrogen movement from the alloy tank 10 to the alloy tank 11 does not occur. Further, even when the temperatures of both the alloy tanks 10, 11 are both 10°C as in the regenerative operation of the first embodiment and the second embodiment, the dissociation pressure of the alloy A is higher than the dissociation pressure of the alloy B, and thus hydrogen movement from the alloy tank 1 1 to the alloy tank 10 does not occur. That is, when the relationship between the temperature-dissociation pressure characteristics of the hydrogen storage alloys in both the alloy tanks 10, 11 is as illustrated in Fig. 16, it is difficult to perform the heat pump operation in the first embodiment and the second embodiment.

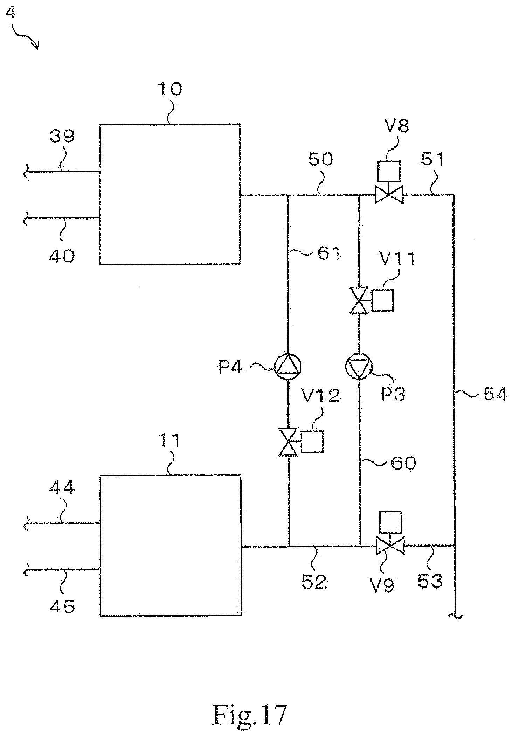

On the other hand, the hydrogen unit 4 of the fifth embodiment has a configuration as illustrated in Fig. 17. Note that while only a configuration around both the alloy tanks 10, 11 is illustrated in Fig. 17, the other configuration is the same as that of the hydrogen unit 4 of the first to fourth embodiments.

In the hydrogen unit 4 in the fifth embodiment, one end of a pipe 60 is connected to a middle part of the pipe 50 connecting the alloy tank 10 and the valve V8, and the other end of the pipe 60 is connected to a middle part of the pipe 52 connecting the alloy tank 11 and the valve V9. This pipe 60 is provided with a valve V11 and a gas pump P3 that sends hydrogen from the alloy tank 10 to the alloy tank 11. Similarly, one end of another pipe 61 is connected in a middle part of the pipe 50, and the other end of the pipe 61 is connected in a middle part of the pipe 52. The pipe 61 is provided with a gas pump P4 that sends hydrogen from the alloy tank 11 toward the alloy tank 10 and a valve V12.

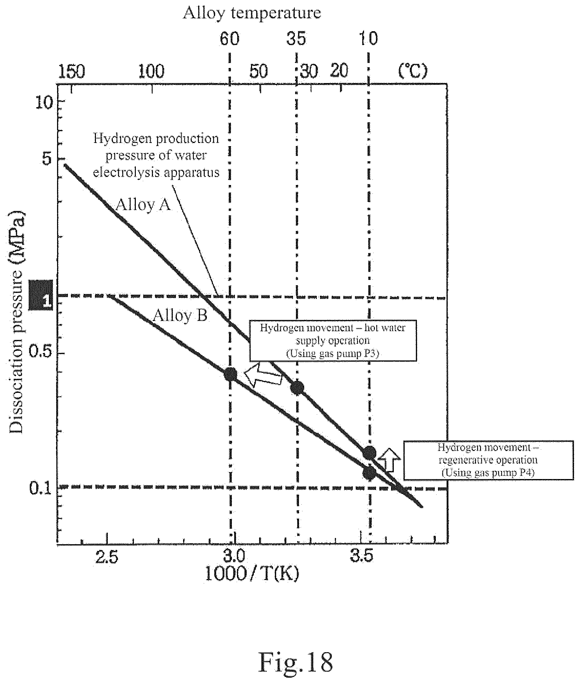

In the hydrogen unit 4 having such a configuration, even if movement of hydrogen does not occur by a difference in dissociation pressure between the alloys A, B of both the alloy tanks 10, 11, hydrogen can be moved from the side of the alloy having a low dissociation pressure to the side of the alloy having a high dissociation pressure as illustrated in Fig. 18 by using pressures given by the gas pumps P3, P4 as force to move hydrogen.

When hydrogen is moved by the pressures given by the gas pumps P3, P4, the temperature and the dissociation pressure of the alloy on the side where hydrogen is released first decrease as hydrogen is released. Thus, it becomes difficult for hydrogen to be released. Accordingly, unless the alloy on the hydrogen release side is heated so that the temperature becomes constant and hydrogen is easily released, the pressure necessary for suction of the gas pumps P3, P4 continues to increase, and there is a risk that eventually hydrogen can no longer be sucked. Also in the fifth embodiment, there is no difference from the case of using the dissociation pressure difference between both the alloys A, B in that it is necessary to give the amount of heat absorbed accompanying release of hydrogen from the outside, but a temperature zone thereof is relatively wide, and it is possible to use a low-temperature heat source that could not be used when an external heat source is used as a driving force.

Next, the temperature and the dissociation pressure of the alloy on the hydrogen receiving side rise as hydrogen is stored. Thus, it becomes difficult for hydrogen to be stored. Accordingly, unless heat is removed so that the alloy on the hydrogen storage side has a constant temperature and thus hydrogen is stored easily, hydrogen cannot be pushed in by the pressures applied by the gas pumps P3, P4. Thus, although it is necessary to remove the amount of heat generated as hydrogen is stored, a temperature zone thereof just needs to be determined according to the purpose of using hot water, and the heat can also be recovered as hot water that cannot be obtained when the dissociation pressure difference between both the alloys A, B is used.

In the heat-storage system 1 of the fifth embodiment as described above, providing the gas pump P3 that sends hydrogen from the alloy tank 10 toward the alloy tank 11 and the gas pump P4 that sends hydrogen from the alloy tank 11 toward the alloy tank 10 has the following merits.
(1) The temperature-dissociation pressure characteristics of both the alloys A, B do not necessarily have to have an intersection.
(2) Choices of the temperature zone of the external heat source to be given or removed for hydrogen absorption and release can be expanded as compared to the case of moving hydrogen using the dissociation pressure difference between the alloys A, B.

However, in both cases of storage and release, as lifts of the gas pumps P3, P4 increase, power consumption is increased, and it is necessary to raise specifications of the gas pumps P3, P4. For this reason, alloy characteristics or an operating temperature zone may be selected so that a discharge lift and a suction lift of the gas pumps P3, P4 are small. Based on this idea, for example, the temperature of the external low-temperature heat source during the hot water supply operation and the operating temperature during the regenerative operation can be the same. Specifically, this operating method is conceivable when geothermal heat is used. Further, when the gas pumps P3, P4 are provided, energy efficiency decreases by the amount of motive power for driving the gas pumps P3, P4 as compared to a case where the gas pumps P3, P4 are not provided. However, the heat-storage system 1 provided with the gas pumps P3, P4 has higher energy efficiency than conventional heat-storage systems in which heat of the external heat source is not used and discarded. That is, it is possible to produce hot water more efficiently than the conventional heat-storage systems. In addition, it is advantageous in terms of energy efficiency when the gas pumps P3, P4 are not provided. Accordingly, in order to make hydrogen movement using only the dissociation pressure difference between the alloys A, B in the alloy tanks 10, 11 easily occur, the alloys A and B may be of a combination such that the temperature zone where the temperature-dissociation pressure characteristics intersect is of temperatures (for example, around 20°C) between the outside air temperature in the wintertime and surrounding periods thereof and the external heat source temperatures.

In addition, as one that exerts a force to move hydrogen, it is also possible to use a combination ofthe dissociation pressure difference and the gas pumps P3, P4 according to an operating state or a power situation. In this manner, there are merits as follows.
(1) Even when the heat-storage system 1 is basically designed to move hydrogen using the dissociation pressure difference, by using the gas pumps P3, P4 as a force to move hydrogen when the necessary amount of external heat source cannot be secured, the heat pump operation can be performed efficiently and more reliably according to conditions of the external heat source.
(2) When the heat-storage system 1 is basically designed to move hydrogen using the dissociation pressure difference, a need may arise such that it is desired to complete hot water storage operation in a short time on the demand side, or to store hot water at a higher temperature. When such a need arises, movement of hydrogen from the alloy tank 10 to the alloy tank 11 can be facilitated.
(3) A heat-storage system according to alloy characteristics or external heat source conditions can be built, such as moving hydrogen using a dissociation pressure difference during the hot water supply operation and moving hydrogen by driving the gas pumps P3, P4 during the regenerative operation.

As described above, by combining the dissociation pressure difference between both the alloys A, B and the gas pumps P3, P4 as the force to move hydrogen, restrictions on the alloy specifications or the external heat source when the heat pump operation is performed can be further reduced, making it possible to cope with a case where the operation must be performed under conditions that deviate from design values in operation.

What to use as the force to move hydrogen is mostly determined by the alloy characteristics, the external heat source temperature, and the hot water supply temperature desired to be extracted. However, depending on the day, the temperature of the external heat source may fluctuate, or a predetermined amount of external heat source may not be ensured. In such a case, if the gas pumps can be driven to move hydrogen, the heat pump operation itself can be established, and energy efficient operation can be performed by moving hydrogen by the dissociation pressure difference in a normal time.

In addition, when the heat pump operation is performed one cycle per day, a basic operation is to perform a regenerative operation when the outside air temperature is low at night and to perform the hot water supply operation during the day. For example, when the heat pump operation is performed two cycles a day, it is necessary to perform the regenerative operation and the hot water supply operation at night, and perform the regenerative operation and the hot water supply operation during the day. In this case, for example, in the regenerative operation during the day, the outside air temperature becomes high, and thus the temperature during the regenerative operation may become higher than the design value. Accordingly, it is possible that hydrogen cannot be moved only by the dissociation pressure difference, but by providing the gas pumps, it becomes possible to move hydrogen.

Further, there is a possibility that the external heat source is insufficient in the hot water supply operation during the day, there is a possibility that a supply temperature from the external heat source in the hot water supply operation becomes lower than the design value. In this case, it is possible that hydrogen cannot be moved only by the dissociation pressure difference, but hydrogen can be moved by having the gas pumps. Further, surplus power of solar power generation may occur during the day depending on the day. In this case, the gas pumps can be driven by this surplus power, and the heat pump operation can be performed during the day. By having the gas pumps, it is possible to cope with various situations that can be assumed in practice, and thus both the dissociation pressure difference and the gas pumps may be secured as the force to move hydrogen. This is particularly effective when it is desired to perform multiple heat pump cycles per day.

Note that if the direction of moving hydrogen with a gas pump is one direction, "installing two gas pumps" or "making a piping route switching circuit so that the direction of hydrogen movement can be changed with one gas pump" is no longer necessary, which has a merit in practice. In order to have one direction of moving hydrogen, if the external heat source conditions are within an assumable range, the characteristics of both the alloys may be selected so that hydrogen can always be moved by the dissociation pressure difference in either operation.

Table 1 illustrates examples of combinations of forces to move hydrogen during the heat pump operation.

**[Table 1]**

| Other application examples | Hot water supply operation | Regenerative operation |
|---|---|---|
| [1] | Dissociation pressure difference | Gas pump |
| [2] | | Dissociation pressure difference + Gas pump |
| [3] | Gas pump | Dissociation pressure difference |
| [4] | | Dissociation pressure difference + Gas pump |
| [5] | Dissociation pressure difference + gas pump | Dissociation pressure difference |
| [6] | | Gas pump |
| [7] | | Dissociation pressure difference + Gas pump |

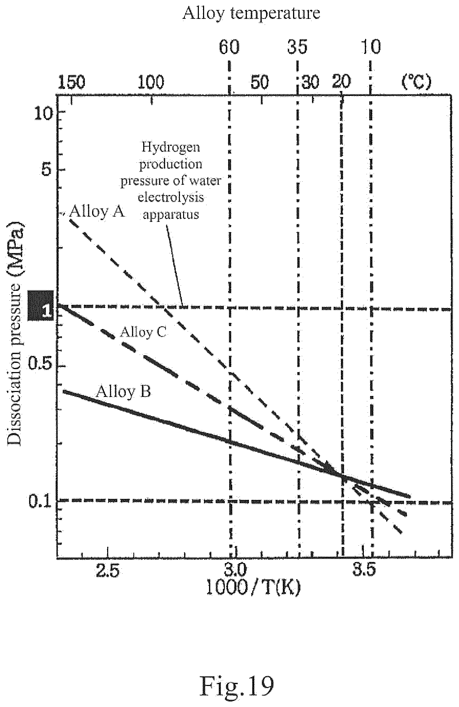

In the embodiments described above, the heat-storage system 1 is configured by using the alloy tanks 10, 11 having different alloy characteristics. However, the number of hydrogen storage alloy tanks is not limited to the two described above, and more hydrogen storage alloy tanks may be provided. In an example illustrated in Fig. 19, a hydrogen storage alloy tank having an alloy C having characteristics different from those of the alloy A and the alloy B is provided. Here, assuming that the temperature in the hot water supply temperature range is 60°C, the dissociation pressure of the alloy C at the temperature in the hot water supply temperature range is lower than the dissociation pressure of the alloy A and higher than the dissociation pressure of the alloy B. Further, if the temperature of the external heat source is 35°C, the dissociation pressure of the alloy C at the temperature of the external heat source is lower than the dissociation pressure of the alloy A and higher than the dissociation pressure of the alloy B. On the other hand, when the outside air temperature is 10°C, the dissociation pressure of the alloy C at the outside air temperature is higher than the dissociation pressure of the alloy A and lower than the dissociation pressure of the alloy B. For the alloy A, the alloy B, and the alloy C in this example, an MmNi-based alloy, a TiFe-based alloy, a TiV-based BCC alloy, a TiVCr-based BCC alloy, a TiCr-based BCC alloy, or the like is used.

Here, the hydrogen storage alloy tank having a relatively high dissociation pressure in the hot water supply temperature range is defined as a first hydrogen storage alloy tank (first tank), and the hydrogen storage alloy tank having a relatively low dissociation pressure in the hot water supply temperature range is defined as a second hydrogen storage alloy tank (second tank). For example, if the first alloy tank is the tank of the alloy A, the second alloy tank is the tank of the alloy B or the tank of the alloy C. Further, if the first alloy tank is the tank of the alloy C, the second alloy tank is the tank of the alloy B. In this case, hydrogen moves from the first alloy tank to the second alloy tank by supplying heat from the external heat source to the first alloy tank. Consequently, a hydrogen storage reaction occurs in the hydrogen storage alloy (alloy B or alloy C) in the second alloy tank, and at that time, the hot water supply operation can be performed using heat. On the other hand, if the heat medium is circulated so that the hydrogen storage alloy (alloy A or alloy C) in the first alloy tank is cooled to the outside air temperature, hydrogen moves from the second alloy tank to the first alloy tank. Thus, the regenerative operation in which hydrogen is stored in the first alloy tank can be performed. Thus, even when the number of hydrogen storage alloy tanks increases, the hot water supply operation and the regenerative operation of the heat-storage system 1 can be performed.

In the example illustrated in Fig. 19, during the hot water supply operation, hydrogen moves sequentially in the order of the alloy A tank, the alloy C tank, and the alloy B tank. Further, during the regenerative operation, hydrogen moves sequentially in the order of the alloy B tank, the alloy C tank, and the alloy A tank. As illustrated in Fig. 19, the amount of heat that can be taken out when there are three alloy tanks is almost doubled with reference to a case where there are two alloy tanks. Furthermore, when there are four alloy tanks, the amount of heat is almost tripled. That is, the amount of heat that can be taken out can be increased every time the number of alloy tanks is increased. As the number of alloy tanks increases, the amount of heat from the external heat source necessary for hydrogen release increases, but since the energy to be obtained is larger, it is possible to produce hot water more efficiently than hitherto.

Further, in the embodiments described above, the configuration as illustrated in Fig. 1 or 2 is exemplified as the heat-storage system 1, but the configuration of the heat-storage system 1 is not limited to this. For example, the heat-storage system 1 includes a plurality of hydrogen storage alloy tanks having different dissociation pressure characteristics with respect to alloy temperatures, and is configured to supply heat generated in the hydrogen storage alloy tank to water supplied from the outside. Then, the heat-storage system 1 is configured to be capable of performing a hot water supply operation to circulate a heated heat medium through a first alloy tank, and cause movement of hydrogen from the first alloy tank to a second alloy tank, and a regenerative operation to circulate a cooled heat medium in the heat circulation device through the first alloy tank, and cause movement of hydrogen from the second alloy tank to the first alloy tank. With such a configuration, even at a time when energy independence is difficult, hot water can be efficiently produced using heat generated by movement of hydrogen between the hydrogen storage alloy tanks.

In addition, in the heat-storage system 1, during the heat pump operation, even when there is an emergency that no power is sent from the system power 80 due to a disaster or the like for example, fuel cell power generation can be performed with hydrogen reserved for the heat pump operation. By using power of the separately installed power storage apparatus 3, power from the fuel cell apparatus 9, and hot water while it is raining or in the nighttime when no power can be obtained from solar power generation, although it depends on the scale of the heat-storage system 1, it is possible to supply energy to the house 100 as usual for several days.

In addition, when the heat-storage system 1 according to the above embodiments is installed in a house, it is possible to expand the effective space in the site. The reason will be described below.

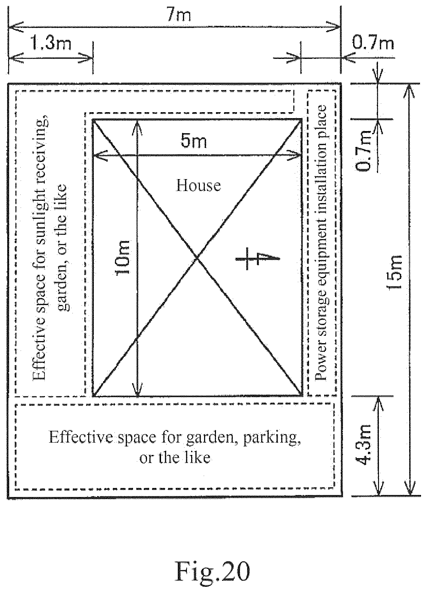

Fig. 20 is a diagram illustrating an example of a house in an urban area, and is a site layout view illustrating the positional relationship of a house and a garden, and so on. The house exemplified in Fig. 20 has a land area of 100 m² and a building coverage ratio of 50%. In the site layout as illustrated in Fig. 20, power storage equipment included in the heat-storage system 1 is arranged in a space on the north side of the house.

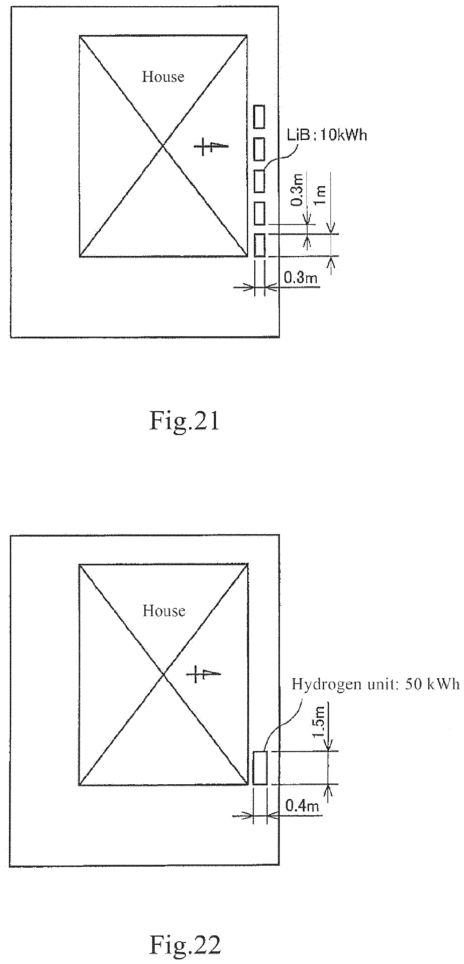

Here, if the power storage equipment included in the heat-storage system constituted only of lithium ion batteries (LiB) with a storage capacity of 10 kWh, assuming that 50 kWh of energy is to be stored as a power storage apparatus, five lithium ion batteries are arranged as illustrated in Fig. 21. That is, when only the lithium ion battery is used, it occupies most of the space on the north side of the house as a footprint of the power storage apparatus. In addition, as the size of the lithium ion battery, a general value of a lithium ion battery having a storage capacity of 10 kWh that is currently commercially available is used. The height of the lithium ion battery is about 1 m. In addition, an interval of 0.3 m is provided as a space for performing maintenance between the lithium ion batteries.

On the other hand, in the case of the heat-storage system 1 according to the present disclosure, in order to secure 50 kWh of energy with a combined output of electric power and heat, it is only necessary to arrange one hydrogen unit 4 having a size as illustrated in Fig. 22. That is, the heat-storage system 1 according to the present disclosure makes it possible to reduce the footprint of the power storage equipment to half or less as compared to the case where only the lithium ion battery is used as the power storage equipment. The height of the hydrogen unit 4 is about 1.5 m.

As described above, by the heat-storage system 1 according to the present disclosure, hot water can be produced more efficiently than hitherto, the footprint of the power storage equipment can be greatly reduced, and a vacant space by that amount can be effectively utilized.

As mentioned above, although embodiments of the present disclosure have been described, the present disclosure is not limited to such examples. It is obvious to those skilled in the art that various changes or modifications are conceivable within the scope of the technical idea described in the claims, and it is understood that such changes or modifications belong of course to the technical scope of the present disclosure.

### Industrial Applicability

The present disclosure is useful for heat-storage systems for houses and commercial facilities.

### Reference Signs List

- 1: heat-storage system
- 2: solar power generation apparatus
- 3: power storage apparatus
- 4: hydrogen unit
- 5: water heater
- 6: hot water storage tank
- 7: controller
- 8: water electrolysis apparatus
- 9: fuel cell apparatus
- 10: first hydrogen storage alloy tank
- 11: second hydrogen storage alloy tank
- 20: dehumidifier
- 21: heat exchanger
- 22: radiator
- 23: heat exchanger
- 30 to 61: pipe
- 70: pipe
- 71: pipe
- 100: house
- P1: pump
- P2: pump
- P3: gas pump
- P4: gas pump
- V1 to V12: valve

## Claims

1. A heat-storage system comprising:
a first tank that stores a first hydrogen storage alloy;
a second tank that stores a second hydrogen storage alloy that is different from the first hydrogen storage alloy in dissociation pressure characteristic with respect to an alloy temperature;
a heat storage device that stores heat generated in the second hydrogen storage alloy;
a hydrogen transfer device configured such that hydrogen is movable between the first hydrogen storage alloy in the first tank and the second hydrogen storage alloy in the second tank;
a first heat supply device that supplies heat of a heat source to the first hydrogen storage alloy;
a second heat supply device that supplies cold of outside air to the first hydrogen storage alloy; and
a controller that executes
a first operating mode to heat the first hydrogen storage alloy through the first heat supply device to cause movement of hydrogen from the first hydrogen storage alloy in the first tank to the second hydrogen storage alloy in the second tank, and
a second operating mode to cool the first hydrogen storage alloy through the second heat supply device to cause movement of hydrogen from the second hydrogen storage alloy in the second tank to the first hydrogen storage alloy in the first tank.

2. The heat-storage system according to claim 1, wherein
the hydrogen transfer device includes a first gas pump that sends hydrogen from the first tank to the second tank, and
in the first operating mode, the controller operates the first gas pump when a dissociation pressure of the first hydrogen storage alloy is lower than a dissociation pressure of the second hydrogen storage alloy.

3. The heat-storage system according to claim 1 or 2, wherein
the hydrogen transfer device includes a second gas pump that sends hydrogen from the second tank to the first tank, and
in the second operating mode, the controller operates the second gas pump when a dissociation pressure of the second hydrogen storage alloy is lower than a dissociation pressure of the first hydrogen storage alloy.

4. The heat-storage system according to any one of claims 1 to 3, further comprising:
a water electrolysis apparatus; and
a first supply device that supplies hydrogen generated in the water electrolysis apparatus to the first tank, wherein
in the first operating mode, the controller controls the first supply device to supply hydrogen generated in the water electrolysis apparatus to the first tank.

5. The heat-storage system according to any one of claims 1 to 3, further comprising:
a water electrolysis apparatus; and
a second supply device that supplies hydrogen generated in the water electrolysis apparatus to the second tank, wherein
in the first operating mode, the controller controls the second supply device to supply hydrogen generated in the water electrolysis apparatus to the second tank.

6. The heat-storage system according to any one of claims 1 to 5, further comprising:
a fuel cell apparatus; and
a third supply device that supplies hydrogen from the first hydrogen storage alloy in the first tank to the fuel cell apparatus, wherein
after the first operating mode, the controller controls the third supply device to supply hydrogen from the first hydrogen storage alloy in the first tank to the fuel cell apparatus, and causes the fuel cell apparatus to perform power generation.

7. The heat-storage system according to claim 6, wherein after supplying hydrogen from the first hydrogen storage alloy in the first tank to the fuel cell apparatus and causing power generation, the controller executes the second operating mode.

8. The heat-storage system according to any one of claims 1 to 5, further comprising:
a fuel cell apparatus; and
a fourth supply device that supplies hydrogen from the second hydrogen storage alloy in the second tank to the fuel cell apparatus, wherein
after the second operating mode, the controller controls the fourth supply device to supply hydrogen from the second hydrogen storage alloy in the second tank to the fuel cell apparatus, and causes the fuel cell apparatus to perform power generation.

9. The heat-storage system according to any one of claims 1 to 5, further comprising:
a fuel cell apparatus; and
a third supply device that supplies hydrogen from the first hydrogen storage alloy in the first tank to the fuel cell apparatus, wherein
when a power failure occurs during execution of either the first operating mode or the second operating mode, the controller controls the third supply device to supply hydrogen from the first hydrogen storage alloy in the first tank to the fuel cell apparatus, and causes the fuel cell apparatus to perform power generation.

10. The heat-storage system according to any one of claims 1 to 5, further comprising:
a fuel cell apparatus; and
a fourth supply device that supplies hydrogen from the second hydrogen storage alloy in the second tank to the fuel cell apparatus, wherein
when a power failure occurs during execution of either the first operating mode or the second operating mode, the controller controls the fourth supply device to supply hydrogen from the second hydrogen storage alloy in the second tank to the fuel cell apparatus, and causes the fuel cell apparatus to perform power generation.

11. An operating method of a heat-storage system, comprising the steps of:
executing a first operating mode to supply heat of a heat source to a first hydrogen storage alloy in a first tank, to cause movement of hydrogen from the first hydrogen storage alloy in the first tank to a second hydrogen storage alloy in a second tank, the second hydrogen storage alloy being different from the first hydrogen storage alloy in dissociation pressure characteristic with respect to an alloy temperature; and
executing a second operating mode to supply cold of outside air to the first hydrogen storage alloy, to cause movement of hydrogen from the second hydrogen storage alloy in the second tank to the first hydrogen storage alloy in the first tank, wherein
the step of executing the first operating mode includes a step of storing a temperature generated in the second hydrogen storage alloy in a heat storage device.

12. The operating method of the heat-storage system according to claim 11, wherein the step of executing the first operating mode includes a step of operating a first gas pump that sends hydrogen from an inside of the first tank to the second tank when a dissociation pressure of the first hydrogen storage alloy is lower than a dissociation pressure of the second hydrogen storage alloy.

13. The operating method of the heat-storage system according to claim 11 or 12, wherein the step of executing the second operating mode includes a step of operating a second gas pump that sends hydrogen from the second tank to the first tank when a dissociation pressure ofthe second hydrogen storage alloy is lower than a dissociation pressure of the first hydrogen storage alloy.

14. The operating method ofthe heat-storage system according to any one of claims 11 to 13, wherein the step of executing the first operating mode includes a step of supplying hydrogen generated in a water electrolysis apparatus to the first tank.

15. The operating method ofthe heat-storage system according to any one of claims 11 to 14, wherein the step of executing the first operating mode includes a step of supplying hydrogen generated in a water electrolysis apparatus to the second tank.

16. The operating method ofthe heat-storage system according to any one of claims 11 to 15, further comprising, after the step of executing the first operating mode, a step of supplying hydrogen from the first hydrogen storage alloy in the first tank to a fuel cell apparatus, and causing the fuel cell apparatus to perform power generation.

17. The operating method of the heat-storage system according to claim 16, wherein after the step of supplying hydrogen from the first hydrogen storage alloy in the first tank to the fuel cell apparatus and causing the fuel cell apparatus to perform power generation, the step of executing the second operating mode is performed.

18. The operating method ofthe heat-storage system according to any one of claims 11 to 15, further comprising, after the step of executing the second operating mode, a step of supplying hydrogen from the second hydrogen storage alloy in the second tank to a fuel cell apparatus, and causing the fuel cell apparatus to perform power generation.

19. The operating method ofthe heat-storage system according to any one of claims 11 to 15, wherein either the step of executing the first operating mode or the step of executing the second operating mode includes a step of supplying hydrogen from the first hydrogen storage alloy in the first tank to a fuel cell apparatus and causing the fuel cell apparatus to perform power generation when a power failure occurs.

20. The operating method ofthe heat-storage system according to any one of claims 11 to 15, wherein either the step of executing the first operating mode or the step of executing the second operating mode includes a step of supplying hydrogen from the second hydrogen storage alloy in the second tank to a fuel cell apparatus and causing the fuel cell apparatus to perform power generation when a power failure occurs.
